(19) Europäisches Patentamt
European Patent Office
Office européen des brevets

(11) **EP 3 509 298 A1**

(12) **EUROPEAN PATENT APPLICATION**
published in accordance with Art. 153(4) EPC

(43) Date of publication:
**10.07.2019 Bulletin 2019/28**

(21) Application number: **17856807.7**

(22) Date of filing: **28.09.2017**

(51) Int Cl.:
*H04N 19/11* (2014.01)   *H04N 19/105* (2014.01)
*H04N 19/593* (2014.01)   *H04N 19/176* (2014.01)
*H04N 19/186* (2014.01)   *H04N 19/174* (2014.01)

(86) International application number:
**PCT/KR2017/010888**

(87) International publication number:
**WO 2018/062921 (05.04.2018 Gazette 2018/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **30.09.2016   US 201662401912 P**

(71) Applicant: **LG Electronics Inc.
Seoul 07336 (KR)**

(72) Inventors:
• **JANG, Hyeongmoon
  Seoul 06772 (KR)**
• **NAM, Junghak
  Seoul 06772 (KR)**

(74) Representative: **Maikowski & Ninnemann
Patentanwälte Partnerschaft mbB
Postfach 15 09 20
10671 Berlin (DE)**

(54) **METHOD AND APPARATUS FOR BLOCK PARTITIONING AND INTRA PREDICTION IN IMAGE CODING SYSTEM**

(57)   An intra prediction method according to the present invention comprises the steps of: deriving a partitioning structure of a luma block; deriving intra chroma prediction mode information for deriving an intra prediction mode of a chroma block corresponding to the luma block; when the intra chroma prediction mode information indicates a derived mode (DM) or a linear mode (LM), partitioning the chroma block on the basis of the partitioning structure of the luma block so as to derive a plurality of chroma sub-blocks; and generating prediction samples for the plurality of chroma sub-blocks. According to the present invention, it is possible to efficiently perform illumination compensation-based inter prediction and reduce a boundary error of a block while reducing the amount of data in additional information. According to the present invention, it is possible to efficiently perform partitioning and intra prediction for a chroma block on the basis of a partitioning structure of a luma block.

FIG. 21

START

DERIVE PARTITIONING STRUCTURE OF LUMA BLOCK — S2100

DERIVE INTRA CHROMA PREDICTION MODE INFORMATION FOR INDUCING INTRA PREDICTION MODE OF CORRESPONDING CHROMA BLOCK — S2110

PARTITION CHROMA BLOCK BASED ON PARTITIONING STRUCTURE OF LUMA BLOCK IF INTRA CHROMA PREDICTION MODE INFORMATION INDICATES DM OR LM — S2120

GENERATE PREDICTION SAMPLES BY PERFORMING INTRA PREDICTION FOR A PLURALITY OF CHROMA SUBBLOCKS — S2130

ENCODE AND OUTPUT LUMA PARTITION INFORMATION AND PREDICTION INFORMATION — S2140

END

EP 3 509 298 A1

**Description**

**BACKGROUND OF THE INVENTION**

Field of the invention

The present invention relates to an image coding technology and, more particularly, to a method and apparatus for block partitioning and intra prediction in an image coding system.

Related Art

Demand for high-resolution, high-quality images such as HD (High Definition) images and UHD (Ultra High Definition) images have been increasing in various fields. As the image data has high resolution and high quality, the amount of information or bits to be transmitted increases relative to the legacy image data. Therefore, when image data is transmitted using a medium such as a conventional wired/wireless broadband line or image data is stored using an existing storage medium, the transmission cost and the storage cost thereof are increased.

Accordingly, there is a need for a highly efficient image compression technique for effectively transmitting, storing, and reproducing information of high resolution and high quality images.

**SUMMARY OF THE INVENTION**

The present invention provides a method and apparatus for improving an image coding efficiency.

The present invention also provides a method and apparatus for block partitioning and intra prediction efficiency.

The present invention also provides a method and apparatus for deriving a block structure of a chroma component based on a block structure of a luma component.

The present invention also provides a method and apparatus for intra prediction performance for a chroma component by using intra prediction mode for a luma component.

The present invention also provides a method for efficiently performing intra prediction while reducing the amount of data of additional information.

In an aspect, an intra prediction method performed by an encoding device is provided. The method includes deriving a split structure of a luma block, deriving intra chroma prediction mode information for inducing intra prediction mode of a chroma block corresponding to the luma block, deriving a plurality of chroma subblocks by partitioning the chroma block based on the partitioning structure of the luma block when the intra chroma prediction mode information represents derived mode (DM) or linear mode (LM), generating prediction samples for the plurality of chroma subblocks, and encoding partition information and prediction information to thereby be outputted.

In another aspect, an encoding device for intra prediction is provided. The encoding device includes a picture partition unit configured to induce a partitioning structure of a luma block, a predictor configured to induce intra chroma prediction mode for inducing an intra prediction mode of a chroma block corresponding to the luma block, derive a plurality of chroma subblocks by partitioning the chroma block based on a partitioning structure of the luma block if the intra chroma prediction mode information represents derived mode (DM) or linear mode (LM), and generate prediction samples for the plurality of chroma subblocks, and an entropy encoder configured to encode and output partition information and prediction information.

In further another aspect, an intra prediction method performed by a decoding device is provided. The method includes deriving a split structure of a luma block, deriving intra chroma prediction mode information for inducing intra prediction mode of a chroma block corresponding to the luma block, deriving a plurality of chroma subblocks by partitioning the chroma block based on the partitioning structure of the luma block when the intra chroma prediction mode information represents derived mode (DM) or linear mode (LM), and generating prediction samples for the plurality of chroma subblocks.

In further another aspect, a decoding device for intra prediction is provided. The decoding device includes a receiver configured to receive partition information and a predictor configured to derive a split structure of a luma block based on the partition information, derive intra chroma prediction mode information for inducing intra prediction mode of a chroma block corresponding to the luma block, and derive a plurality of chroma subblocks by partitioning the chroma block based on the partitioning structure of the luma block when the intra chroma prediction mode information represents derived mode (DM) or linear mode (LM), and generate prediction samples for the plurality of chroma subblocks.

According to the present invention, partitioning and intra prediction for a chroma block can be efficiently performed based on a partitioning structure of a luma block.

According to the present invention, a block structure of a chroma component can be efficiently derived based on a block structure of a luma component.

According to the present invention, intra prediction performance for a chroma component can be enhanced by using intra prediction mode for a luma component.

According to the present invention, intra prediction can be efficiently performed while reducing the amount of additional data.

## BRIEF DESCRIPTION OF THE DRAWINGS

FIG. 1 is a schematic diagram illustrating a configuration of a video encoding device to which the present invention is applicable.

FIG. 2 is a schematic diagram illustrating a configuration of a video decoding device to which the present invention is applicable.

FIG. 3 illustrates a CU split through a quad tree binary tree (QTBT) structure and a signaling method of the QTBT structure.

FIG. 4 illustrates dependent/independent partitioning structures of a luma block and a chroma block.

FIGS. 5A and 5B illustrate intra prediction modes.

FIG. 6 illustrates an example of a case where a derived mode (DM) is applied to a chroma block.

FIG. 7 illustrates an example of a case where a linear mode (LM) is applied to a chroma block.

FIG. 8 illustrates neighbor reference samples used as a template in order to derive an LM parameter.

FIGS. 9 and 10 illustrate an example of a case where DM is applied to a chroma block to which an independent partitioning structure is applied.

FIGS. 11 and 12 illustrate another example of a case where DM is applied to a chroma block to which an independent partitioning structure is applied.

FIG. 13 illustrates an example of a case where LM is applied to a chroma block to which an independent partitioning structure is applied.

FIG. 14 illustrates an example of a case where one LM parameter is derived in an entire chroma block.

FIGS. 15 to 18 illustrate a template which is used to derive an LM parameter of a chroma subblock unit.

FIGS. 19 and 20 illustrate another example of a case where LM is applied to a chroma block to which an independent partitioning structure is applied.

FIG. 21 schematically illustrates an example of an intra prediction method in an image encoding according to the present invention.

FIG. 22 schematically illustrates an example of an intra prediction method in an image decoding according to the present invention.

## DESCRIPTION OF EXEMPLARY EMBODIMENTS

The present invention may be modified in various forms, and specific embodiments thereof will be described and illustrated in the drawings. However, the embodiments are not intended for limiting the invention. The terms used in the following description are used to merely describe specific embodiments, but are not intended to limit the invention. An expression of a singular number includes an expression of the plural number, so long as it is clearly read differently. The terms such as "include" and "have" are intended to indicate that features, numbers, steps, operations, elements, components, or combinations thereof used in the following description exist and it should be thus understood that the possibility of existence or addition of one or more different features, numbers, steps, operations, elements, components, or combinations thereof is not excluded.

Meanwhile, elements in the drawings described in the invention are independently drawn for the purpose of convenience for explanation of different specific functions, and do not mean that the elements are embodied by independent hardware or independent software. For example, two or more elements of the elements may be combined to form a single element, or one element may be divided into plural elements. The embodiments in which the elements are combined and/or divided belong to the invention without departing from the concept of the invention.

Hereinafter, embodiments of the present invention will be described in detail with reference to the accompanying drawings. In addition, like reference numerals are used to indicate like elements throughout the drawings, and the same descriptions on the like elements will be omitted.

In the present specification, generally a picture means a unit representing an image at a specific time, a slice is a unit constituting a part of the picture. One picture may be composed of plural slices, and the terms of a picture and a slice may be mixed with each other as occasion demands.

A pixel or a pel may mean a minimum unit constituting one picture (or image). Further, a "sample" may be used as a term corresponding to a pixel. The sample may generally represent a pixel or a value of a pixel, may represent only a pixel (a pixel value) of a luma component, and may represent only a pixel (a pixel value) of a chroma component.

A unit indicates a basic unit of image processing. The unit may include at least one of a specific area and information related to the area. Optionally, the unit may be mixed with terms such as a block, an area, or the like. In a typical case, an M×N block may represent a set of samples or transform coefficients arranged in M columns and N rows.

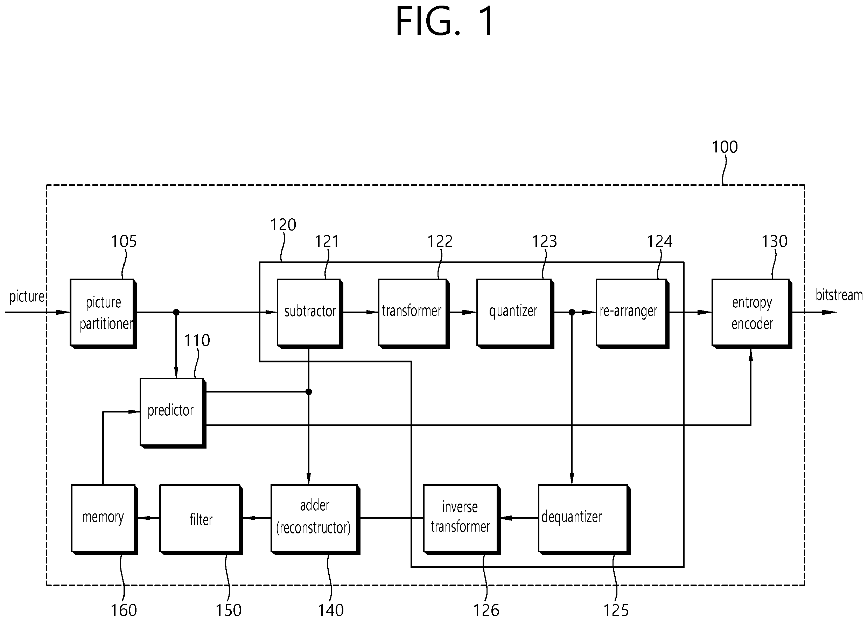

FIG. 1 briefly illustrates a structure of a video encoding device to which the present invention is applicable.

Referring to FIG. 1, a video encoding device 100 may include a picture partitioner 105, a predictor 110, a residual processor 120, an adder 140, a filter 150, and a memory 160. The residual processor 120 may include a subtractor 121, a transformer 122, a quantizer 123, a re-arranger 124, a dequantizer 125, an inverse transformer 126.

The picture partitioner 105 may split an input picture into at least one processing unit.

In an example, the processing unit may be referred to as a coding unit (CU). In this case, the coding unit may be recursively split from the largest coding unit (LCU) according to a quad-tree binary-tree (QTBT) structure. For example, one coding unit may be split into a plurality of coding units of a deeper depth based on a quadtree structure and/or a binary tree structure. In this case, for example, the quad tree structure may be first applied and the binary tree structure may be applied later. Alternatively, the binary tree structure may be applied first. The coding procedure according to the present invention may be performed based on a final coding unit which is not split any further. In this case, the largest coding unit may be used as the final coding unit based on coding efficiency, or the like, depending on image characteristics, or the coding unit may be recursively split into coding units of a lower depth as necessary and a coding unit having an optimal size may be used as the final coding unit. Here, the coding procedure may include a procedure such as prediction, transformation, and reconstruction, which will be described later.

In another example, the processing unit may include a coding unit (CU) prediction unit (PU), or a transform unit (TU). The coding unit may be split from the largest coding unit (LCU) into coding units of a deeper depth according to the quad tree structure. In this case, the largest coding unit may be directly used as the final coding unit based on the coding efficiency, or the like, depending on the image characteristics, or the coding unit may be recursively split into coding units of a deeper depth as necessary and a coding unit having an optimal size may be used as a final coding unit. When the smallest coding unit (SCU) is set, the coding unit may not be split into coding units smaller than the smallest coding unit. Here, the final coding unit refers to a coding unit which is partitioned or split to a prediction unit or a transform unit. The prediction unit is a unit which is partitioned from a coding unit, and may be a unit of sample prediction. Here, the prediction unit may be divided into sub-blocks. The transform unit may be divided from the coding unit according to the quad-tree structure and may be a unit for deriving a transform coefficient and/or a unit for deriving a residual signal from the transform coefficient. Hereinafter, the coding unit may be referred to as a coding block (CB), the prediction unit may be referred to as a prediction block (PB), and the transform unit may be referred to as a transform block (TB). The prediction block or prediction unit may refer to a specific area in the form of a block in a picture and include an array of prediction samples. Also, the transform block or transform unit may refer to a specific area in the form of a block in a picture and include the transform coefficient or an array of residual samples.

The predictor 110 may perform prediction on a processing target block (hereinafter, a current block), and may generate a predicted block including prediction samples for the current block. A unit of prediction performed in the predictor 110 may be a coding block, or may be a transform block, or may be a prediction block.

The predictor 110 may determine whether intra-prediction is applied or inter-prediction is applied to the current block. For example, the predictor 110 may determine whether the intra-prediction or the inter-prediction is applied in unit of CU.

In case of the intra-prediction, the predictor 110 may derive a prediction sample for the current block based on a reference sample outside the current block in a picture to which the current block belongs (hereinafter, a current picture). In this case, the predictor 110 may derive the prediction sample based on an average or interpolation of neighboring reference samples of the current block (case (i)), or may derive the prediction sample based on a reference sample existing in a specific (prediction) direction as to a prediction sample among the neighboring reference samples of the current block (case (ii)). The case (i) may be called a non-directional mode or a non-angular mode, and the case (ii) may be called a directional mode or an angular mode. In the intra-prediction, prediction modes may include as an example 33 directional modes and at least two non-directional modes. The non-directional modes may include DC mode and planar mode. The predictor 110 may determine the prediction mode to be applied to the current block by using the prediction mode applied to the neighboring block.

In case of the inter-prediction, the predictor 110 may derive the prediction sample for the current block based on a sample specified by a motion vector on a reference picture. The predictor 110 may derive the prediction sample for the current block by applying any one of a skip mode, a merge mode, and a motion vector prediction (MVP) mode. In case of the skip mode and the merge mode, the predictor 110 may use motion information of the neighboring block as motion information of the current block. In case of the skip mode, unlike in the merge mode, a difference (residual) between the prediction sample and an original sample is not transmitted. In case of the MVP mode, a motion vector of the neighboring block is used as a motion vector predictor and thus is used as a motion vector predictor of the current block to derive a motion vector of the current block.

In case of the inter-prediction, the neighboring block may include a spatial neighboring block existing in the current picture and a temporal neighboring block existing in the reference picture. The reference picture including the temporal neighboring block may also be called a collocated picture (colPic). Motion information may include the motion vector and a reference picture index. Information such as prediction mode information and motion information may be (entropy) encoded, and then output as a form of a bitstream.

When motion information of a temporal neighboring block is used in the skip mode and the merge mode, a highest picture in a reference picture list may be used as a reference picture. Reference pictures included in the reference picture list may be aligned based on a picture order count (POC) difference between a current picture and a corresponding reference picture. A POC corresponds to a display order and may be discriminated from a coding order.

The subtractor 121 generates a residual sample which is a difference between an original sample and a prediction sample. If the skip mode is applied, the residual sample may not be generated as described above.

The transformer 122 transforms residual samples in units of a transform block to generate a transform coefficient. The transformer 122 may perform transformation based on the size of a corresponding transform block and a prediction mode applied to a coding block or prediction block spatially overlapping with the transform block. For example, residual samples may be transformed using discrete sine transform (DST) transform kernel if intra-prediction is applied to the coding block or the prediction block overlapping with the transform block and the transform block is a 4x4 residual array and is transformed using discrete cosine transform (DCT) transform kernel in other cases.

The quantizer 123 may quantize the transform coefficients to generate quantized transform coefficients.

The re-arranger 124 rearranges quantized transform coefficients. The re-arranger 124 may rearrange the quantized transform coefficients in the form of a block into a one-dimensional vector through a coefficient scanning method. Although the re-arranger 124 is described as a separate component, the re-arranger 124 may be a part of the quantizer 123.

The entropy encoder 130 may perform entropy-encoding on the quantized transform coefficients. The entropy encoding may include an encoding method, for example, an exponential Golomb, a context-adaptive variable length coding (CAVLC), a context-adaptive binary arithmetic coding (CABAC), or the like. The entropy encoder 130 may perform encoding together or separately on information (e.g., a syntax element value or the like) required for video reconstruction in addition to the quantized transform coefficients. The entropy-encoded information may be transmitted or stored in unit of a network abstraction layer (NAL) in a bitstream form.

The dequantizer 125 dequantizes values (transform coefficients) quantized by the quantizer 123 and the inverse transformer 126 inversely transforms values dequantized by the dequantizer 125 to generate a residual sample.

The adder 140 adds a residual sample to a prediction sample to reconstruct a picture. The residual sample may be added to the prediction sample in units of a block to generate a reconstructed block. Although the adder 140 is described as a separate component, the adder 140 may be a part of the predictor 110. Meanwhile, the adder 140 may be referred to as a reconstructor or reconstructed block generator.

The filter 150 may apply deblocking filtering and/or a sample adaptive offset to the reconstructed picture. Artifacts at a block boundary in the reconstructed picture or distortion in quantization may be corrected through deblocking filtering and/or sample adaptive offset. Sample adaptive offset may be applied in units of a sample after deblocking filtering is completed. The filter 150 may apply an adaptive loop filter (ALF) to the reconstructed picture. The ALF may be applied to the reconstructed picture to which deblocking filtering and/or sample adaptive offset has been applied.

The memory 160 may store a reconstructed picture (decoded picture) or information necessary for encoding/decoding. Here, the reconstructed picture may be the reconstructed picture filtered by the filter 150. The stored reconstructed picture may be used as a reference picture for (inter) prediction of other pictures. For example, the memory 160 may store (reference) pictures used for inter-prediction. Here, pictures used for inter-prediction may be designated according to a reference picture set or a reference picture list.

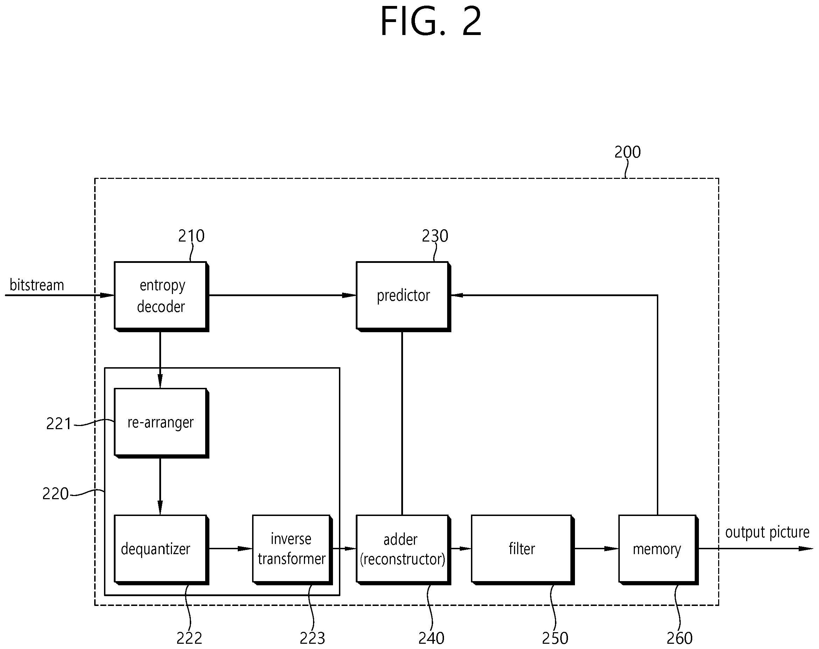

FIG. 2 briefly illustrates a structure of a video decoding device to which the present invention is applicable.

Referring to FIG. 2, a video decoding device 200 may include an entropy decoder 210, a residual processor 220, a predictor 230, an adder 240, a filter 250, and a memory 260. The residual processor 220 may include a re-arranger 221, a dequantizer 222, an inverse transformer 223. Although not illustrated in the drawings, the video decoding device 200 may include a receiving unit for receiving a bitstream including video information. The receiving unit may be configured as a separate module or may be included in the entropy decoder 210.

When a bitstream including video information is input, the video decoding device 200 may reconstruct a video in association with a process by which video information is processed in the video encoding device.

For example, the video decoding device 200 may perform video decoding using a processing unit applied in the video encoding device. Thus, the processing unit block of video decoding may be, for example, a coding unit and, in another example, a coding unit, a prediction unit or a transform unit. The coding unit may be split from the largest coding unit according to the quad tree structure and/or the binary tree structure.

A prediction unit and a transform unit may be further used in some cases, and in this case, the prediction block is a block derived or partitioned from the coding unit and may be a unit of sample prediction. Here, the prediction unit may be divided into sub-blocks. The transform unit may be split from the coding unit according to the quad tree structure and may be a unit that derives a transform coefficient or a unit that derives a residual signal from the transform coefficient.

The entropy decoder 210 may parse the bitstream to output information required for video reconstruction or picture reconstruction. For example, the entropy decoder 210 may decode information in the bitstream based on a coding method such as exponential Golomb encoding, CAVLC, CABAC, or the like, and may output a value of a syntax element required for video reconstruction and a quantized value of a transform coefficient regarding a residual.

More specifically, a CABAC entropy decoding method may receive a bin corresponding to each syntax element in a bitstream, determine a context model using decoding target syntax element information and decoding information of neighboring and decoding target blocks or information of amabol/bin decoded in a previous step, predict bin generation probability according to the determined context model and perform arithmetic decoding of the bin to generate a symbol corresponding to each syntax element value. Here, the CABAC entropy decoding method may update the context model using information of a symbol/bin decoded for a context model of the next symbol/bin after determination of the context model.

Information about prediction among information decoded in the entropy decoder 210 may be provided to the predictor 250 and residual values, that is, quantized transform coefficients, on which entropy decoding has been performed by the entropy decoder 210 may be input to the re-arranger 221.

The re-arranger 221 may rearrange the quantized transform coefficients into a two-dimensional block form. The re-arranger 221 may perform rearrangement corresponding to coefficient scanning performed by the encoding device. Although the re-arranger 221 is described as a separate component, the re-arranger 221 may be a part of the dequantizer 222.

The dequantizer 222 may de-quantize the quantized transform coefficients based on a (de)quantization parameter to output a transform coefficient. In this case, information for deriving a quantization parameter may be signaled from the encoding device.

The inverse transformer 223 may inverse-transform the transform coefficients to derive residual samples.

The predictor 230 may perform prediction on a current block, and may generate a predicted block including prediction samples for the current block. A unit of prediction performed in the predictor 230 may be a coding block or may be a transform block or may be a prediction block.

The predictor 230 may determine whether to apply intra-prediction or inter-prediction based on information on a prediction. In this case, a unit for determining which one will be used between the intra-prediction and the inter-prediction may be different from a unit for generating a prediction sample. In addition, a unit for generating the prediction sample may also be different in the inter-prediction and the intra-prediction. For example, which one will be applied between the inter-prediction and the intra-prediction may be determined in unit of CU. Further, for example, in the inter-prediction, the prediction sample may be generated by determining the prediction mode in unit of PU, and in the intra-prediction, the prediction sample may be generated in unit of TU by determining the prediction mode in unit of PU.

In case of the intra-prediction, the predictor 230 may derive a prediction sample for a current block based on a neighboring reference sample in a current picture. The predictor 230 may derive the prediction sample for the current block by applying a directional mode or a non-directional mode based on the neighboring reference sample of the current block. In this case, a prediction mode to be applied to the current block may be determined by using an intra-prediction mode of a neighboring block.

In the case of inter-prediction, the predictor 230 may derive a prediction sample for a current block based on a sample specified in a reference picture according to a motion vector. The predictor 230 may derive the prediction sample for the current block using one of the skip mode, the merge mode and the MVP mode. Here, motion information required for inter-prediction of the current block provided by the video encoding device, for example, a motion vector and information about a reference picture index may be acquired or derived based on the information about prediction.

In the skip mode and the merge mode, motion information of a neighboring block may be used as motion information of the current block. Here, the neighboring block may include a spatial neighboring block and a temporal neighboring block.

The predictor 230 may construct a merge candidate list using motion information of available neighboring blocks and use information indicated by a merge index on the merge candidate list as a motion vector of the current block. The merge index may be signaled by the encoding device. Motion information may include a motion vector and a reference picture. When motion information of a temporal neighboring block is used in the skip mode and the merge mode, a highest picture in a reference picture list may be used as a reference picture.

In the case of the skip mode, a difference (residual) between a prediction sample and an original sample is not transmitted, distinguished from the merge mode.

In the case of the MVP mode, the motion vector of the current block may be derived using a motion vector of a neighboring block as a motion vector predictor. Here, the neighboring block may include a spatial neighboring block and a temporal neighboring block.

When the merge mode is applied, for example, a merge candidate list may be generated using a motion vector of a reconstructed spatial neighboring block and/or a motion vector corresponding to a Col block which is a temporal neighboring block. A motion vector of a candidate block selected from the merge candidate list is used as the motion vector of the current block in the merge mode. The aforementioned information about prediction may include a merge index indicating a candidate block having the best motion vector selected from candidate blocks included in the merge candidate list. Here, the predictor 230 may derive the motion vector of the current block using the merge index.

When the MVP (Motion vector Prediction) mode is applied as another example, a motion vector predictor candidate list may be generated using a motion vector of a reconstructed spatial neighboring block and/or a motion vector corresponding to a Col block which is a temporal neighboring block. That is, the motion vector of the reconstructed spatial neighboring block and/or the motion vector corresponding to the Col block which is the temporal neighboring block may be used as motion vector candidates. The aforementioned information about prediction may include a prediction motion vector index indicating the best motion vector selected from motion vector candidates included in the list. Here, the predictor 230 may select a prediction motion vector of the current block from the motion vector candidates included in the motion vector candidate list using the motion vector index. The predictor of the encoding device may obtain a motion vector difference (MVD) between the motion vector of the current block and a motion vector predictor, encode the MVD and output the encoded MVD in the form of a bitstream. That is, the MVD may be obtained by subtracting the motion vector predictor from the motion vector of the current block. Here, the predictor 230 may acquire a motion vector included in the information about prediction and derive the motion vector of the current block by adding the motion vector difference to the motion vector predictor. In addition, the predictor may obtain or derive a reference picture index indicating a reference picture from the aforementioned information about prediction.

The adder 240 may add a residual sample to a prediction sample to reconstruct a current block or a current picture. The adder 240 may reconstruct the current picture by adding the residual sample to the prediction sample in units of a block. When the skip mode is applied, a residual is not transmitted and thus the prediction sample may become a reconstructed sample. Although the adder 240 is described as a separate component, the adder 240 may be a part of the predictor 230. Meanwhile, the adder 240 may be referred to as a reconstructor or reconstructed block generator.

The filter 250 may apply deblocking filtering, sample adaptive offset and/or ALF to the reconstructed picture. Here, sample adaptive offset may be applied in units of a sample after deblocking filtering. The ALF may be applied after deblocking filtering and/or application of sample adaptive offset.

The memory 260 may store a reconstructed picture (decoded picture) or information necessary for decoding. Here, the reconstructed picture may be the reconstructed picture filtered by the filter 250. For example, the memory 260 may store pictures used for inter-prediction. Here, the pictures used for inter-prediction may be designated according to a reference picture set or a reference picture list. A reconstructed picture may be used as a reference picture for other pictures. The memory 260 may output reconstructed pictures in an output order.

When coding is performed on the input picture, the coding may be performed based on one processing unit. The processing unit may be represented as a coding unit (CU). Meanwhile, as coding is performed in units of areas including similar information in the picture, transform efficiency may be improved and accordingly overall coding efficiency may be improved. In addition, as coding is performed in units of areas including similar information in the picture, prediction accuracy may be improved and accordingly overall coding efficiency may be improved. However, when only the quad tree (QT) structure is applied and the picture is split into square CUs, there may be a limitation in splitting the picture such that the CUs include only accurately similar information. In this case, the picture may be split into non-square CUs including information representing the specific object to enhance coding efficiency.

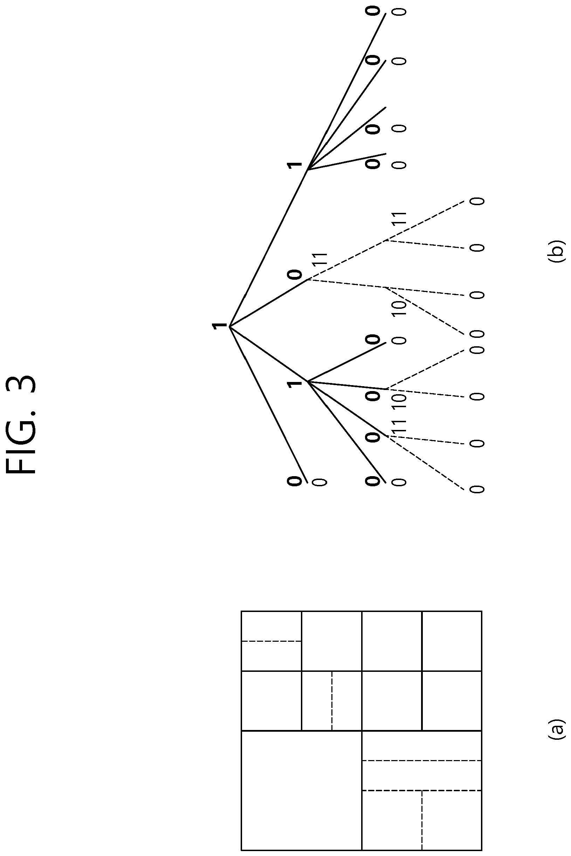

FIG. 3 illustrates a CU split through a quad tree binary tree (QTBT) structure and a signaling method of the QTBT structure.

The QTBT structure may represent a structure in which a CU (or CTU) is split through a QT structure and split through a binary tree (BT) structure. That is, the QTBT may represent a splitting structure configured by combining the QT structure and the BT structure. When a picture is coded in units of CTU, the CTU may be split through the QT structure. A leaf node of the QT structure may be further split through the BT structure. Here, the leaf node may represent a CU which is not split any further in the QT structure, and the leaf node may be called an end node. In addition, the QT structure may represent a structure in which a CU (or CTU) having a 2Nx2N size is split into four sub-CUs having a NxN size, and the BT structure may represent a structure in which a CU having a 2Nx2N size is split into two sub-CUs having a Nx2N (or nLx2N, nRx2N) size or two sub-CUs having a 2NxN (or 2NxnU, 2NxnD) size. Referring to FIG. 3(a), the CU may be split into square CUs of a deeper depth through the QT structure, and a specific CU among the square CUs may be split into non-square CUs of a deeper depth through the BT structure.

FIG. 3(b) illustrates an example of syntax signaling of the QTBT structure. The solid line illustrated in FIG. 3(b) may represent the QT structure and the dotted line may represent the BT structure. Also, from the top to the bottom, the syntax for CUs from a higher depth to a deeper depth may be represented. In addition, the syntax for the upper left side, the upper right side, the lower left side, and the lower right side CUs in the left-to-right direction may be represented. Specifically, the uppermost number may represent a syntax for a CU of n depth, the numbers at the second position from above may represent a syntax for CUs of n+1 depth, the numbers at the third position from above may represent a syntax for CUs of n+2 depth, and the numbers at the fourth position from above may represent a syntax for CUs of n+3 depth. Also, the numbers in the bold may represent values of syntaxes for the QT structure, and numbers not represented in the bold may represent values of syntaxes for the BT structure.

Referring to FIG. 3(b), a QT split flag indicating whether a CU is split through the QT structure may be transmitted. That is, a flag indicating whether a CU having a 2Nx2N size is split into 4 sub-CUs having an NxN size may be transmitted. For example, if the value of the QT split flag for the CU is 1, the CU may be split into 4 sub CUs, and if the value of the QT split flag for the CU is 0, the CU may not be split. In addition, information on a maximum CU size, a minimum CU size, and a maximum depth in the QT structure may be transmitted to adjust the QT structure for the input image. The information on the QT structure described above may be transmitted for each of the slice types or may be transmitted for each of image components (luminance component, saturation component, etc.). Meanwhile, the information about the BT structure may be transmitted to the end node which is not split any further in the QT structure. That is, information on the BT structure for the CU corresponding to the end node in the QT structure may be transmitted. Here, information including the information on the BT structure may be referred to as additional splitting information. For example, a BT split flag indicating whether the CU is split through the BT structure, i.e., whether the BT structure for the CU is applied, may be transmitted. Specifically, when the value of the BT split flag is 1, the CU may be split into two sub-CUs, and when the value of the BT split flag is 0, the CU may not be split. In addition, information on the maximum CU size, the minimum CU size, the maximum depth in the BT structure, and the like, may be transmitted to adjust the BT structure for the input image. The information about the BT structure described above may be transmitted for each of the slice types or may be transmitted for each of the image components. When the CU is split through the BT structure, the CU may be split in a horizontal or vertical direction. A BT split mode index indicating a direction in which the CU is split, i.e., a split type of the CU, may be further transmitted.

On the other hand, according to the present invention, the partitioning structure of a luma component block (hereinafter referred to as a luma block) may be set to be the same as the partitioning structure of a chroma component block (hereinafter referred to as a chroma block), or may be set differently. Whether the partitioning structure of the chroma block is dependent on or independent from the partitioning structure of the luma block can be determined based on the slice type. For example, the slice type may be one of an I (intra) slice, a P (predictive) slice, and a B (bi-predictive) slice. The I slice represents a slice that is decoded using only intra prediction. The P slice represents a slice that can be decoded using intra prediction or inter prediction, and the inter prediction indicates a prediction in which a maximum of one motion vector and a reference picture index are used to predict sample values of each block. The B slice represents a slice that can be decoded using intra prediction or inter prediction, and the inter prediction indicates a prediction in which a maximum of two motion vectors and reference picture indexes are used to predict sample values of each block.

If the slice type of the current slice is the I slice, the luma block and the chroma block in the I slice may have different (independent) partitioning structures. That is, in this case, the split flags described above can be signaled for the chroma block separately from the luma block.

On the other hand, when the slice type of the current slice is the P slice or the B slice, the luma block and the chroma block in the slice may have the same partitioning structure.

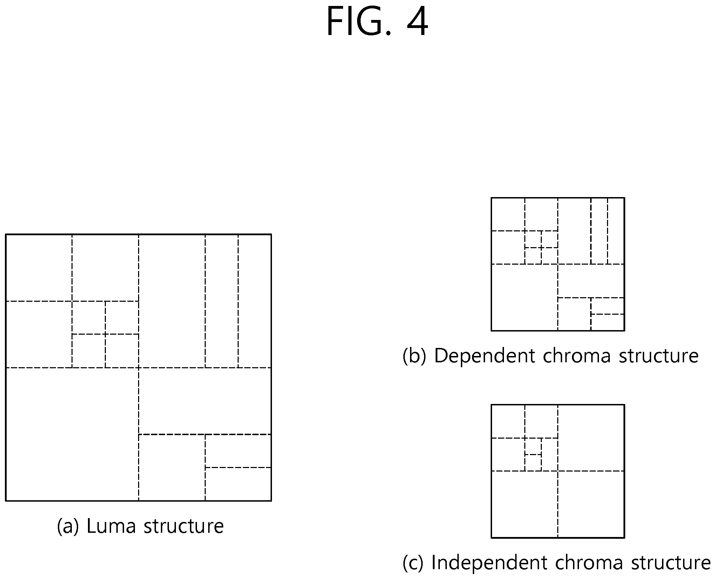

FIG. 4 illustrates dependent/independent partitioning structures of a luma block and a chroma block.

FIG. 4A shows a partitioning structure of a luma block, FIG. 4B shows a dependent partitioning structure of a chroma block, and FIG. 4C shows an independent partitioning structure of a chroma block. The ratio of the luma sample and the chroma sample can be set differently for the same area according to the color format (4: 2: 2 format, 4: 2: 0 format, etc.). As such, the size of the chroma block can be set to be smaller than that of the luma block.

Referring to FIG. 4B, the partitioning structure of the chroma block is used depending on the partitioning structure of the luma block, which can be applied when the current slice is a P slice or a B slice. Referring to FIG. 4C, the partitioning structure of the chroma block is set independently of the partitioning structure of the luma block, and this can be applied when the current slice is an I slice.

On the other hand, when intra prediction is applied to the current block, prediction samples are derived using at least one neighboring sample according to the intra prediction mode based on the current block. In this case, the intra prediction mode may include, for example, 33 directional (or angular) prediction modes and two non-directional (or non-angular) prediction modes as follows.

[Table 1]

| Intra prediction mode | Associated name |
|---|---|
| 0 | Intra planar |
| 1 | Intra DC |
| 2...34 | Intra angular 2...Intra angular 34 |

Here, the 0-th intra prediction mode indicates the intra-planar mode, and the 1-th intra prediction mode indicates the intra-DC mode. Intra prediction modes 2 to 34 represent intra-angular 2 mode...intra-angular 34 mode.

Herein, the intra-planar mode and the intra-DC mode are non-directional prediction modes, and the intra-angular 2 to intra-angular 34 modes are directional prediction modes.

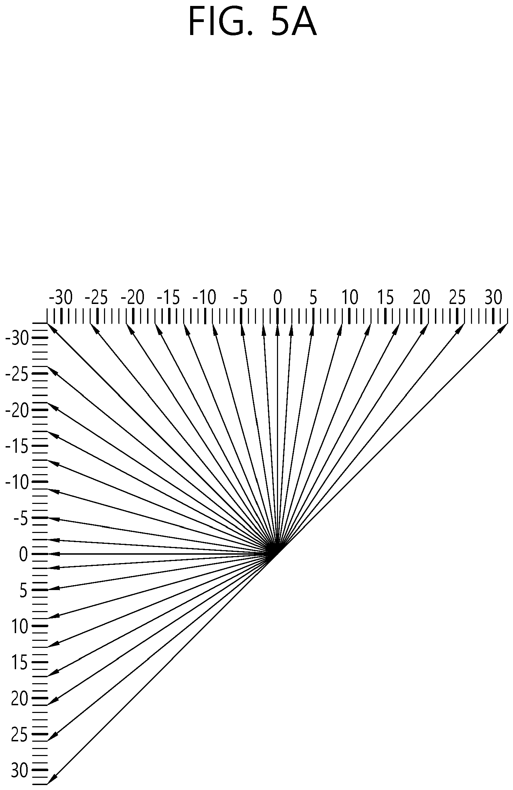

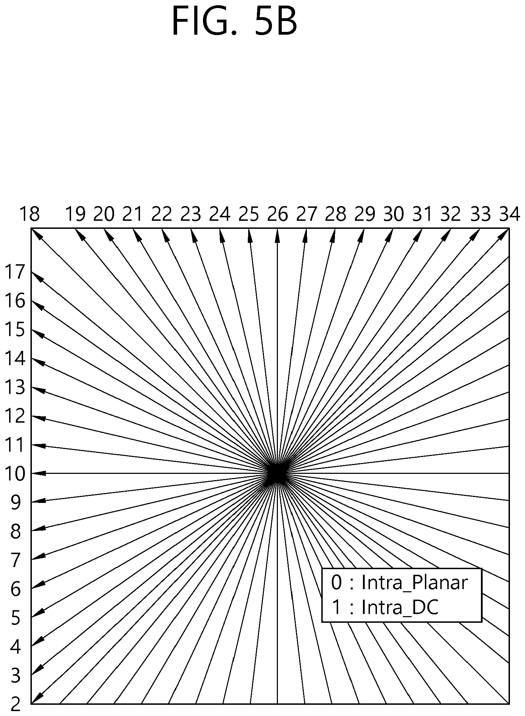

FIGS. 5A and 5B illustrate intra prediction modes.

Referring to FIG.5A and FIG. 5B, it is possible to distinguish an intra-prediction mode having a horizontal directionality from an intra-prediction mode having a vertical directionality around an intra-prediction mode #18 having a left-top diagonal prediction direction. The numbers -32 to 32 in FIG. 5A represent vertical or horizontal displacements in 1/32 units on the sample grid position. The intra-prediction modes #2 to #17 have a horizontal directionality, and the intra-prediction modes #18 to #34 have a vertical directionality. The intra-prediction mode #10 and the intra-prediction mode #26 indicate the horizontal intra prediction mode and the vertical intra prediction mode, respectively, and the prediction direction of the angular intra mode can be expressed on the basis thereof. In other words, the relative angle corresponding to each intra-prediction mode can be expressed with reference to the horizontal reference angle 0° corresponding to the intra-prediction mode #10, and the relative angle corresponding to each intra prediction mode can be expressed with reference to the vertical reference angle 0° corresponding to the intra prediction mode #26.

Intra prediction modes #0 and #1 have no directionality, and prediction samples can be derived based on the bi-directional interpolation of neighboring samples, or the average value of neighboring samples. Further, the intra prediction modes #2 to #34 have the directionality as shown in FIG. 5B, and the prediction samples can be derived using the neighboring reference samples located in the prediction direction with reference to the position of the prediction sample. In this case, if there is no neighboring sample of the integer sample unit at the prediction direction position, a fractional sample can be generated through interpolation of two integer samples adjacent to the corresponding direction position, and the prediction sample may be derived based on the fractional sample.

When intra prediction is performed on the current block as described above, a prediction for a luma component block (luma block) and a prediction for a chroma component block (chroma block) of the current block can be performed. In this case, the intra prediction mode for the chroma component (chroma block) can be set separately from the intra prediction mode for the luma component (luma block). For example, in the case of the intra prediction mode for luma components, the decoding device can select one of the most probable mode (mpm) candidates derived based on the intra prediction mode of the left block and the intra prediction mode of the upper block of the current block, or can select one of the remaining intra prediction modes not included in the mpm candidates based on the remaining intra prediction mode information. The mpm index may be signaled in the form of mpm idx syntax element, and the remaining intra prediction mode information may be signaled in the form of a rem_intra_luma_pred_mode syntax element. The remaining intra prediction mode information may index the remaining intra prediction modes not included in the mpm candidates among all intra prediction modes in order of the prediction mode number, and indicate one of them.

On the other hand, the intra-prediction mode for the chroma component can be indicated based on the intra-chroma prediction mode information, and the intra-chroma prediction mode information can be signaled in the form of the intra-chroma_pred_mode syntax element. The intra-chroma prediction mode information may indicate one of a planar mode, a DC mode, a vertical mode, a horizontal mode, a DM (Derived Mode), and a LM (Linear Mode). Herein, the planar mode may represent intra-prediction mode #0, the DC mode may represent intra-prediction mode #1, the vertical mode may represent intra-prediction mode #26, and the horizontal mode may represent intra-prediction mode #10. On the other hand, DM and LM are dependent prediction modes for predicting chroma blocks using information of luma blocks.

First, DM indicates a mode in which an intra prediction mode identical to the intra prediction mode for the luma component is applied to the intra prediction mode for the chroma component.

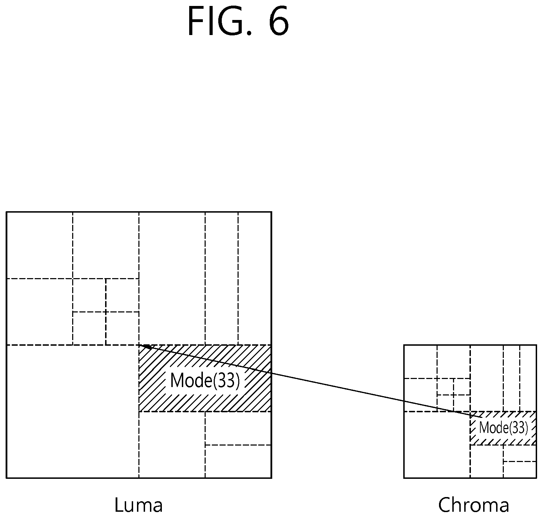

FIG. 6 illustrates an example of a case where a derived mode (DM) is applied to a chroma block.

Referring to FIG. 6, when the intra-chroma prediction mode information indicates DM, the intra prediction mode of the chroma component can use the intra prediction mode of the corresponding luma component as it is. For example, when the intra prediction mode of the luma component indicates the intra-prediction mode #33 and the intra-chroma prediction mode information indicates the DM, the intra prediction mode of the chroma component may be the intra-prediction mode #33.

Meanwhile, the LM sub-samples the reconstructed samples of the luma block in the process of generating the prediction block for the chroma block, and applies the LM parameters $\alpha$ and $\beta$ to the subsampled samples to generate the derived samples as prediction samples of the chroma block.

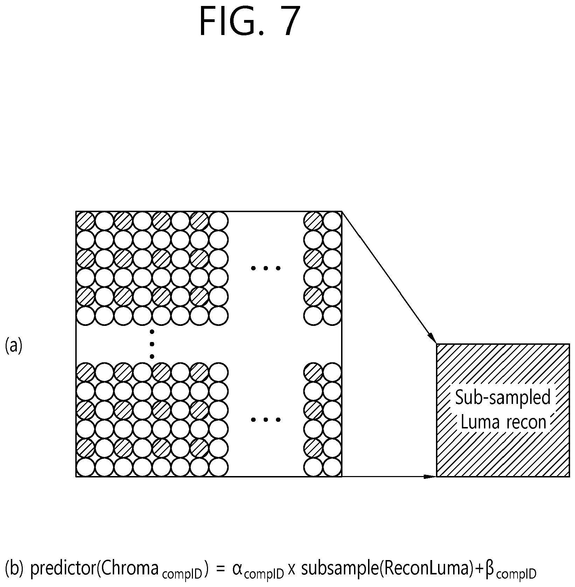

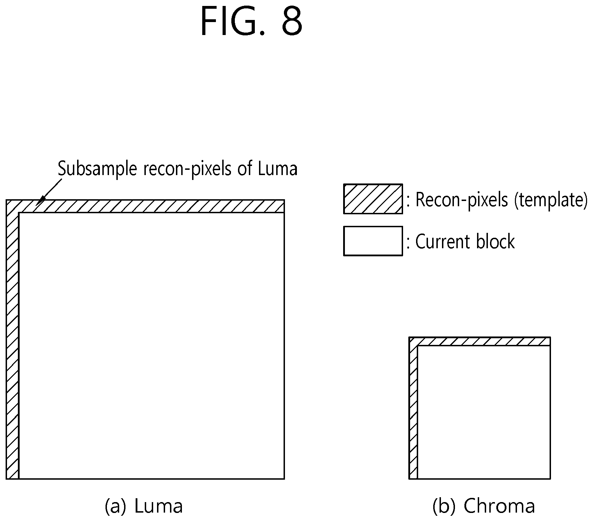

FIG. 7 illustrates an example of a case where a linear mode (LM) is applied to a chroma block. FIG. 8 illustrates neighbor reference samples used as a template in order to derive an LM parameter.

Referring to FIG. 7, the predictor of equation FIG. 7B may represent a prediction sample, and the compID may represent an ID or an index for a color component. For example, value 0 may represent a luma component (Y), value 1 may represent Cb in the chroma component, and value 2 may represent Cr in the chroma component. ReconLuma represents a luma component restoration sample. As shown in the equation of FIG. 7B, the prediction block of the chroma block may include chroma prediction samples derived by multiplying subsampled luma component restoration

block samples with $\alpha$ and adding $\beta$. In this case, the chroma prediction sample of the corresponding phase can be derived by multiplying $\alpha$ and adding $\beta$ based on the phase for the sub-sampled luma component restoration block sample. If the color format is 4: 2: 0, the size of the luma block corresponding to the chroma block is four times, so that it can be sub-sampled as shown in FIG. 7A. Herein, with respect to the LM parameters $\alpha$ and $\beta$, the value, in which the template of the chroma block becomes most similar to the template of the luma block, is calculated using the least squares method by using the neighbor reference samples of the current (luma/chroma) block as a template as shown in FIG. 8. In this case, the neighboring reference samples of the luma block may be sub-sampled and used as a template.

The LM parameters can be derived based on a linear model, for example, alpha and beta can be derived based on the following equations.

[Equation 1]

$$\sum y = \alpha * \sum x + \beta$$

Here, the LM parameters $\alpha$ and $\beta$ denote the scaling factor and offset, respectively, and x and y are the (sub-sampled) neighboring reference sample values of the luma block and neighboring reference sample values of the chroma block, respectively. In the LM parameter derivation process, the difference between the two sides of Equation 1 can be regarded as an error (E), and LM parameters $\alpha$ and $\beta$, which satisfy the condition that minimizes the error, can be obtained and applied to the samples of the sub-sampled luma block. That is, after the LM parameter is derived, the prediction samples of the chroma block can be derived by applying a scaling factor and an offset to the samples of the subsampled luma block in units of samples.

Since the LM parameters $\alpha$ and $\beta$ to be obtained in Equation 1 are values that minimize errors of both sides, the equation for obtaining the LM parameters can be expressed as follows.

[Equation 2]

$$E(\alpha, \beta) = \sum_i (yi - \alpha xi - \beta)^2 + \lambda(\alpha - 1)^2$$

Where E ($\alpha$, $\beta$) represents the $\alpha$ and $\beta$ values minimizing the error, where i is the index of each sample and $\lambda$ (lambda) is the control parameter. The lambda may be predetermined or may be derived, for example, based on x. For example, it can be derived like $\lambda = (\sum_i x_i x_i \gg 7)$, or as another example, $\lambda$ may be set to 0 and the later portion of the Equation 2 may be omitted. This is the same in the following equations.

The above Equation 2 can be summarized as follows.

[Equation 3]

$$\begin{pmatrix} \sum_i x_i x_i + \lambda & \sum_i x_i \\ \sum_i x_i & \sum_i 1 \end{pmatrix} \begin{pmatrix} \alpha \\ \beta \end{pmatrix} = \begin{pmatrix} \sum_i x_i y_i + \lambda \\ \sum_i y_i \end{pmatrix}$$

Based on Equation 3, the LM parameters $\alpha$ and $\beta$ can be derived as follows.

[Equation 4]

$$\alpha = \frac{N \sum_i x_i y_i - \sum_i x_i \sum_i y_i + \lambda}{N \sum_i x_i x_i - \sum_i x_i \sum_i x_i + \lambda}$$

[Equation 5]

$$\beta = \sum_i y_i - \alpha * \sum_i x_i$$

In Equation 4, N denotes a normalization parameter. Herein, N can be derived from the portion $\sum_i 1$ of the above Equation 3. For example, N may be determined based on the size of the chroma block.

According to the present invention, when the prediction of the chroma component is performed, if the information of the luma component is used, the chroma block is partitioned in the same form as the partitioning structure of the luma block, and encoding and decoding are performed in respective partitioned block units. In the case of using a dependent prediction mode such as DM and LM when the partitioning structure of the luma block and the partitioning structure of the chroma block are independently set, the partitioning structure of the luma block and the partitioning structure of the chroma block are different, which may be a problem. That is, in the DM or LM, the intra prediction mode of the luma block or the restoration sample information of the luma block is used for the chroma block, and there is no problem if the partitioning structure of the chroma block is the same as the partitioning structure of the corresponding luma block, but if the corresponding luma block is additionally partitioned or partitioned into other structures, it can be inferred that there are multiple intra prediction modes at the corresponding position, or that there is an edge in the texture at the corresponding position. For this reason, in the present invention, when a dependent prediction mode such as DM and LM is applied to a chroma block, the partitioning structure, which is the same as the partitioning structure of the luma block, can be applied to the chroma block without a separate signaling for the current chroma block in consideration of the partitioning structure of the corresponding luma block, and prediction can be performed in respective, partitioned block units.

For example, when DM is applied to a chroma block, the chroma block is partitioned in the same manner as the partitioning structure of the corresponding luma block in the coding and prediction process for the chroma block, and the intra prediction for the corresponding (sub) block can be performed using the intra prediction mode of the luma component corresponding in partitioned (sub) block units. In this case, when the DM is applied to the chroma block under the condition that the luma block and the chroma block can have different block partitioning structures as described above, the current chroma block may be partitioned without separate additional information (partition syntax) with reference to the block partition shape of the luma block corresponding to the current chroma block, and the intra prediction and the decoding can be performed by deriving the prediction mode for the chroma component from the prediction mode of the luma component at the corresponding position in respective partitioned (sub) block units.

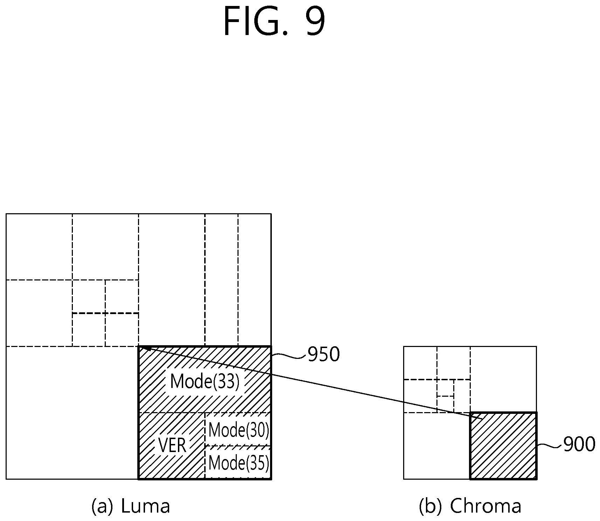

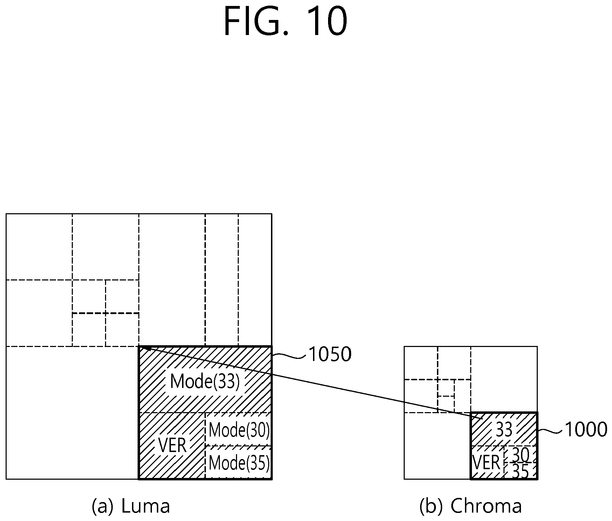

FIGS. 9 and 10 illustrate an example of a case where DM is applied to a chroma block to which an independent partitioning structure is applied. As described above, for example, if the current slice is I slice, a partitioning structure independent of the partitioning structure of the luma block may be applied to the chroma block.

Referring to FIG. 9, when DM is applied to the chroma block 900, the intra prediction mode for the chroma block may use the intra prediction mode of the corresponding luma block 950. However, as shown, the partitioning structure of chroma block 900 and the corresponding partitioning structure of luma block 950 may be different. In this case, for example, for the chroma block 900, the intra prediction mode of the block including a specific position of the luma block 950 may be used as the intra prediction mode of the chroma block 900. Herein, the specific location may include, for example, the upper left sample position or center right lower position of the luma block 950, and so on.

Alternatively, as shown in FIG. 10, the chroma block 1000 may be partitioned based on the partitioning structure of the corresponding luma block 1050, and the intra prediction mode of the luma sub-block corresponding to the position of each chroma sub-block can be used as an intra prediction mode of the corresponding chroma sub-block.

On the other hand, if it is necessary to be partitioned into transform and quantization blocks of sizes which are not currently supported, the chroma block is not partitioned.

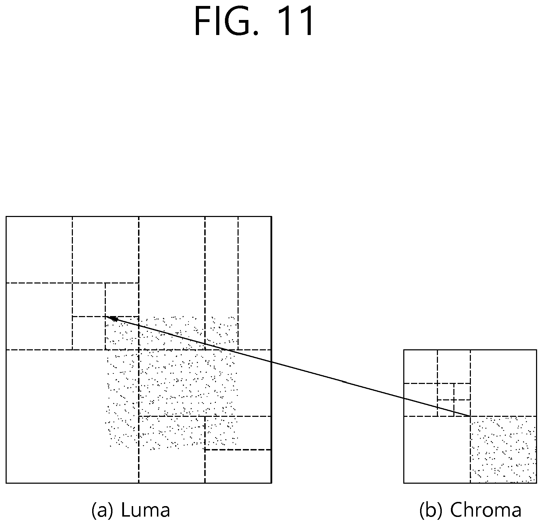

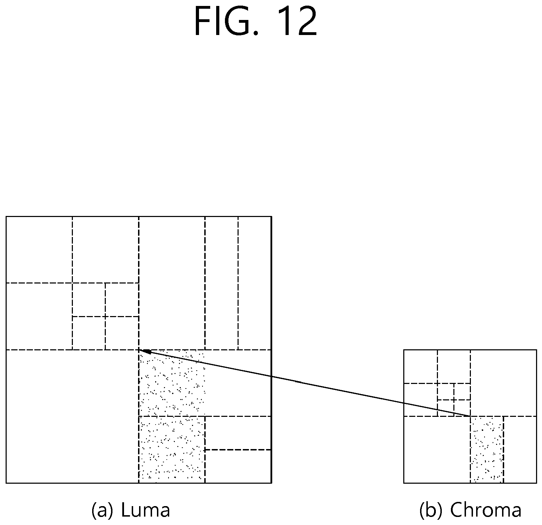

FIGS. 11 and 12 illustrate another example of a case where DM is applied to a chroma block to which an independent partitioning structure is applied.

As shown in FIG. 11, if a luma block corresponding to a chroma block is to be partitioned into a transform and a quantization block that are not currently supported, the corresponding chroma block is not partitioned. In addition, when an area corresponding to the chroma block is superimposed on a part of the luma block as shown in FIG. 12, it is impossible to specify a luma block corresponding to the chroma block. Therefore, the chroma block cannot be partitioned based on the partitioning structure of the luma block.

As another example, when the LM is applied to the chroma block, the chroma block is partitioned in the same manner as the partitioning structure of the corresponding luma block in the coding and predicting process for the chroma block, and the LM parameters may be derived in the partitioned chroma (sub) block units to thereby derive the a prediction sample for the chroma (sub) block based on the LM parameter and the reconstructed samples of the corresponding luma (sub) block. When the LM is applied as described above, the LM parameter is derived based on the template of the chroma block (neighboring reference samples) and the corresponding template of the luma block (sub-sampled neighboring reference samples), and the LM parameter may be linearly applied to the sub-sampled restoration sample of the luma block to thereby derive a predicted sample of the chroma block. In this case, if the luma block in the area corresponding to the chroma block is partitioned, the edge may be included in the texture of the current block to thereby infer that the difference between the sample values around the edge is large. In this case, if the LM parameter is calculated for the whole chroma block and applied linearly, the prediction performance may be deteriorated. Accordingly, when the luma block at the position corresponding to the chroma block is partitioned as described above, the corresponding chroma block may be partitioned without separate additional information (partition syntax) and may be partitioned based on the partitioning structure of the luma block to thereby derive the LM parameters alpha and beta in respective chroma sub-block units and to intra predict and decode the corresponding chroma sub-block.

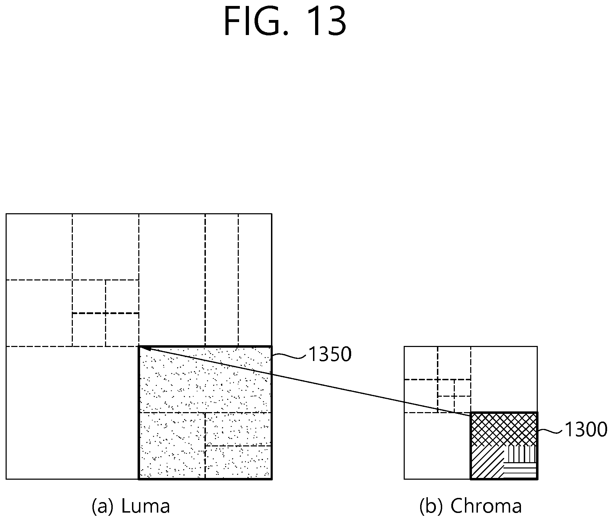

FIG. 13 illustrates an example of a case where LM is applied to a chroma block to which an independent partitioning structure is applied. As described above, for example, if the current slice is I slice, a partitioning structure independent of the partitioning structure of the luma block may be applied to the chroma block.

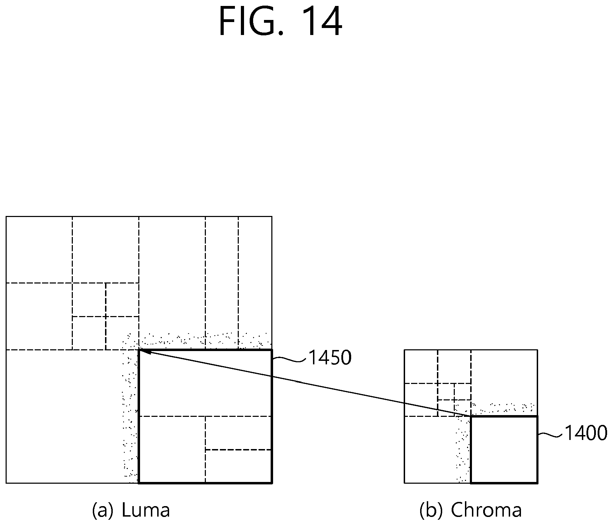

Referring to FIG. 13, when an LM is applied to a chroma block 1300, the LM parameters for the chroma block 1300 may be derived to apply the LM parameters to the subsampled restoration samples of the corresponding luma block 1350, to thereby derive the prediction sample of the chroma block 1300. However, as shown, the partitioning structure of chroma block 1300 and the corresponding partitioning structure of luma block 1350 may be different. That is, in this case, there is a high probability that the chroma block has an image edge or objects having a large sample value difference. In this case, when deriving one LM parameter for the entire chroma block 1400 as shown in FIG. 14, the left/upper neighboring reference samples of the chroma block 1400 and the sub-sampled left/upper neighboring reference samples of the luma block 1450 are used as a template to derive the LM parameters. In this case, there is a high probability that an incorrect value may derived due to the difference in the sample values by the texture division in the block or the object, and the accuracy of the prediction block for the chroma block 1400 may be decreased when linearly applying the LM parameters.

Therefore, rather than deriving one LM parameter for the entire chroma block, the chroma block may be partitioned based on the partitioning structure of the luma block corresponding to the chroma block, to thereby derive the LM parameters for each chroma sub-block and increase the accuracy of the LM parameter.

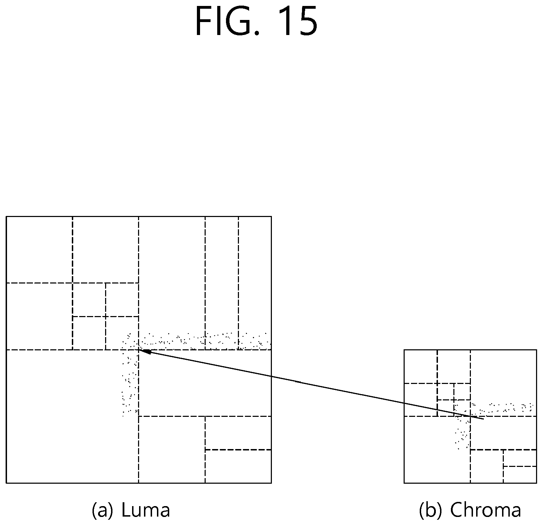

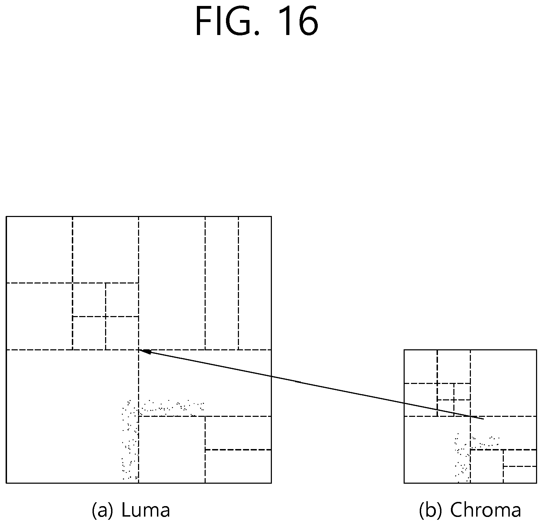

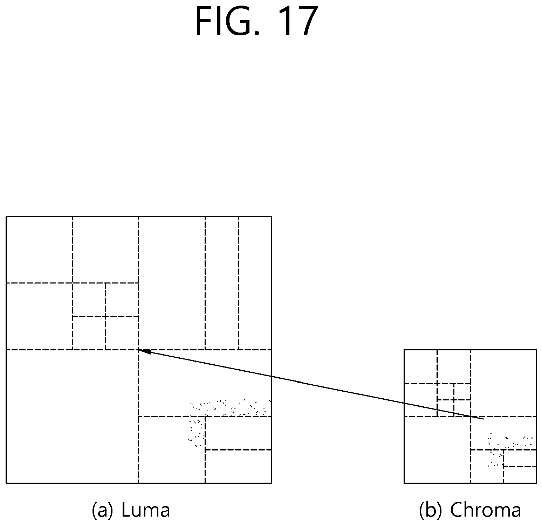

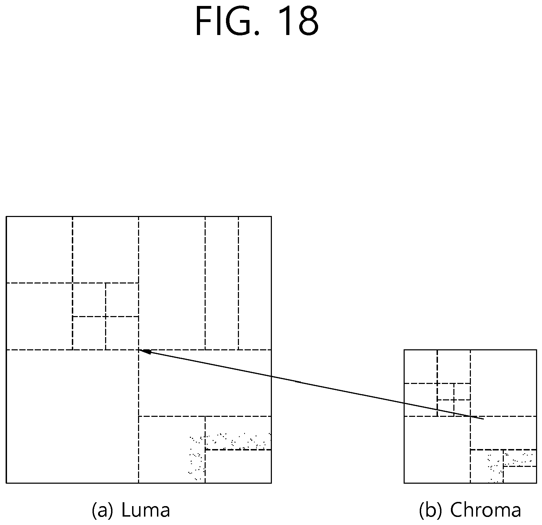

FIGS. 15 to 18 illustrate a template which is used to derive an LM parameter of a chroma subblock unit.

In the case where the partitioning structure of the chroma block to which the LM is applied is different from the partitioning structure of the luma block as described above, the chroma block may be partitioned based on the partitioning structure of the luma block as shown in FIGS. 15 to 18, and the LM parameter for the corresponding chroma sub-block can be derived using the template of each sub-block unit.

On the other hand, if it is necessary to be partitioned into transform and quantization blocks of sizes which are not currently supported, the chroma block is not partitioned.

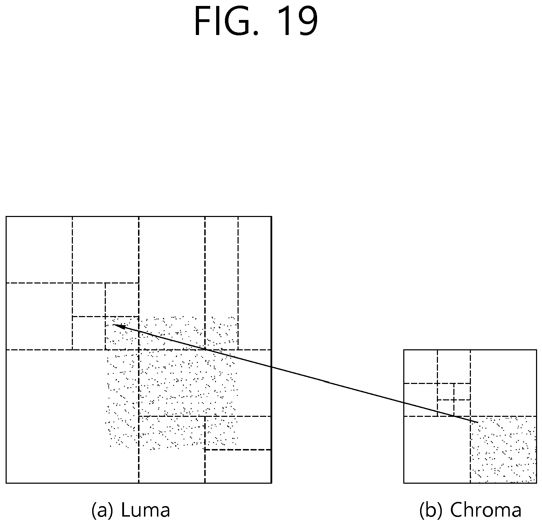

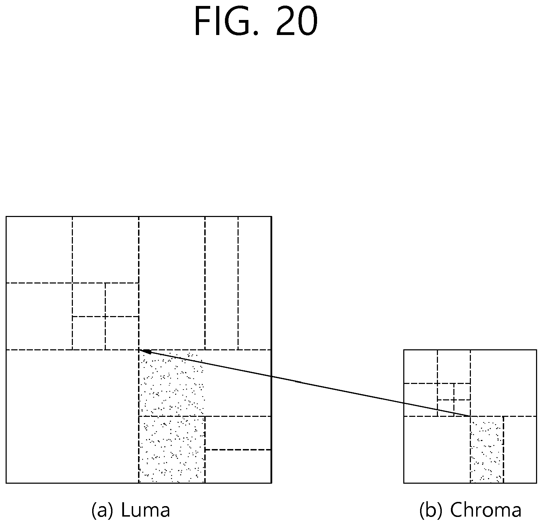

FIGS. 19 and 20 illustrate another example of a case where LM is applied to a chroma block to which an independent partitioning structure is applied.

As shown in FIG. 19, if a luma block corresponding to a chroma block is to be partitioned into a transform and a quantization block that are not currently supported, the corresponding chroma block is not partitioned. In addition, when an area corresponding to the chroma block is superimposed on a part of the luma block as shown in FIG. 20, it is impossible to specify a luma block corresponding to the chroma block. Therefore, the chroma block is not partitioned based on the partitioning structure of the luma block.

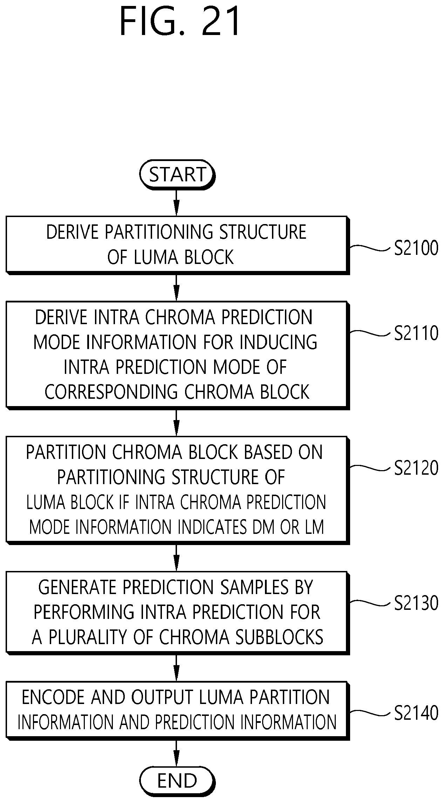

FIG. 21 schematically illustrates an example of an intra prediction method in an image encoding according to the present invention. The method of FIG. 21 can be performed by the encoding device of FIG. 1. Specifically, for example, S2100 of FIG. 21 may be performed by the picture partition unit of the encoding device, S2110 to S2130 may be performed by the predictor of the encoding device, and S2140 may be performed by the entropy encoder of the encoding device.

Referring to FIG. 21, the encoding device derives a partitioning structure of a luma block (S2100). The encoding device can derive a block partitioning structure having an optimal rate-distortion (RD) cost by applying various coding schemes, and can signal the derived block partitioning structure using the partition information as described above with reference to FIG. 3. The partition information may include a luma QT split flag, a luma BT split flag, and the like.

The luma block may include a first luma subblock and a second luma subblock based on the partitioning structure. Herein, the intra prediction mode of the first luma subblock may be different from the intra prediction mode of the second luma subblock.

When the luma block and the chroma block are located in a current slice, if the current slice is I slice, the luma partition information and the chroma partition information for the block in the current slice can be individually signaled to the decoding device.

The encoding device derives intra-chroma prediction mode information for deriving an intra-prediction mode of a chroma block corresponding to the luma block (S2110). The encoding device can derive an intra prediction mode having an optimal RD cost in performing intra prediction on the chroma block. In this case, the intra-chroma prediction mode information for efficiently indicating the intra-prediction mode of the chroma block can be generated. The intra-chroma prediction mode information may indicate DM or LM.

For example, the intra-chroma prediction mode information may indicate one of prediction modes including a planar mode, a DC mode, a vertical mode, a horizontal mode, a DM, and a LM. DM indicates a mode in which an intra prediction mode identical to the intra prediction mode for the luma component is applied to the intra prediction mode for the chroma component. LM indicates a mode in which the reconstructed samples of the luma block are sub-sampled in the process of generating the prediction block for the chroma block, and the LM parameters $\alpha$ and $\beta$ are applied to the subsampled samples to generate the derived samples as prediction samples of the chroma block. DM and LM are dependent prediction modes for predicting chroma blocks using information of luma blocks.

If the intra-chroma prediction mode information indicates the DM or the LM, the encoding device partitions the chroma block based on the partitioning structure of the luma block (S2120). The encoding device may partition the chroma block into a plurality of chroma sub-blocks based on the partitioning structure of the luma block.

The encoding device generates prediction samples for the plurality of subblocks through intra-prediction for each of the plurality of chroma subblocks (S2130).

For example, if the intra-chroma prediction mode information for the chroma block indicates the DM, the intra prediction mode of the first luma sub-block corresponding to the first chroma sub-block is used as the intra-prediction mode of the first chroma sub-block among the plurality of chroma sub-blocks, and the intra prediction mode of the second luma sub-block corresponding to the second chroma sub-block is used as the intra prediction mode of the second chroma sub-block. The encoding device performs intra prediction on the first chroma sub-block using the intra-prediction mode of the first luma sub-block, and performs intra-prediction on the second chroma sub-block using the intra prediction mode of the second luma sub-block.

In another example, if the intra-chroma prediction mode information for the chroma block indicates the LM, the encoding device may derive a first LM parameter for the first chroma sub-block and a second LM parameter for the second chroma sub-block. In this case, the first LM parameter is derived based on the neighboring reference samples of the first chroma sub-block and the sub-sampled neighboring reference samples of the first luma sub-block, and the second LM parameter is derived based on the neighboring reference samples of the second chroma sub-block and the sub-sampled neighboring reference samples of the second luma sub-block. The neighboring reference samples of the first chroma sub-block may include first left neighboring reference samples adjacent to the left boundary of the first chroma sub-block and first upper neighboring reference samples adjacent to the upper boundary of the first chroma sub-block. Further, the neighboring reference samples of the first chroma sub-block may include second left neighboring reference samples adjacent the left boundary of the second chroma sub-block and first upper neighboring reference samples adjacent the upper boundary of the second chroma sub-block. The number of neighboring reference samples in the first chroma sub-block may be equal to the number of sub-sampled neighboring reference samples in the first luma sub-block, and the number of neighboring reference samples in the second chroma sub-block may be equal to the number of sub-sampled neighbor reference samples of the second luma sub-block. The first LM parameter includes a first scaling factor and a first offset, and the encoding device applies the first scaling factor and the first offset to the subsampled restoration samples of the first luma sub-block to thereby derive prediction samples of the first chroma sub-block. The second LM parameter includes a second scaling factor and a second offset, and the encoding device applies the second scaling factor and the second offset to the sub-sampled restoration samples of the second luma sub-block to thereby derive the prediction sample of the second chroma sub-block.

The encoding device encodes and outputs the partition information and the prediction information (S2140). The encoding device can encode the information to thereby be outputted in the form of a bitstream. The bitstream may be transmitted to a decoding device via a network or a storage medium.

The partition information may include the luma QT split flag, the luma BT split flag, and the like for the luma block described above. The prediction information may include intra-chroma prediction mode information for the chroma block. In addition, the prediction information may include information on an intra prediction mode of the luma block. Further, the encoding device can further encode and output residual information. The residual information may include transform coefficients relating to residual samples.

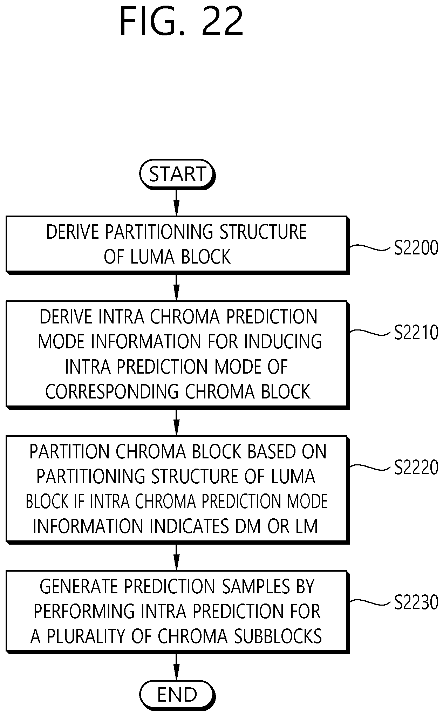

FIG. 22 schematically illustrates an example of an intra prediction method in an image decoding according to the present invention. The method disclosed in FIG. 22 can be performed by the decoding device disclosed in FIG. 2. Specifically, for example, S2200 to S2230 in FIG. 22 can be performed by the predictor of the decoding device.

Referring to FIG. 22, the decoding device derives a partitioning structure of a luma block (S2200). The decoding device can derive the partitioning structure of the luma block based on the partition information obtained from the bit stream of the encoding device.

The luma block may include a first luma subblock and a second luma subblock based on the partitioning structure. Herein, the intra prediction mode of the first luma subblock may be different from the intra prediction mode of the second luma subblock.

When the luma block and the chroma block are located in a current slice, if the current slice is I slice, the luma partition information and the chroma partition information for the block in the current slice can be individually signaled.

The decoding device derives intra-chroma prediction mode information for deriving an intra-prediction mode of a chroma block corresponding to the luma block (S2210). The intra-chroma prediction mode information can be obtained from the bitstream. The intra-chroma prediction mode information may indicate DM or LM. For example, the intra-chroma prediction mode information may indicate one of prediction modes including a planar mode, a DC mode, a vertical mode, a horizontal mode, a DM, and a LM. DM indicates a mode in which an intra prediction mode identical to the intra prediction mode for the luma component is applied to the intra prediction mode for the chroma component. LM indicates a mode in which the reconstructed samples of the luma block are sub-sampled in the process of generating the prediction block for the chroma block, and the LM parameters $\alpha$ and $\beta$ are applied to the subsampled samples to generate the derived samples as prediction samples of the chroma block. DM and LM are dependent prediction modes for predicting chroma blocks using information of luma blocks.

If the intra-chroma prediction mode information indicates the DM or the LM, the decoding device partitions the chroma block based on the partitioning structure of the luma block (S2220). The decoding device may partition the chroma block into a plurality of chroma sub-blocks based on the partitioning structure of the luma block.

The decoding device generates prediction samples for the plurality of subblocks through intra-prediction for each of the plurality of chroma subblocks (S2230).

For example, if the intra-chroma prediction mode information for the chroma block indicates the DM, the intra prediction mode of the first luma sub-block corresponding to the first chroma sub-block is used as the intra-prediction mode of the first chroma sub-block among the plurality of chroma sub-blocks, and the intra prediction mode of the second luma sub-block corresponding to the second chroma sub-block is used as the intra prediction mode of the second chroma sub-block. The decoding device performs intra prediction on the first chroma sub-block using the intra-prediction mode of the first luma sub-block, and performs intra-prediction on the second chroma sub-block using the intra prediction mode of the second luma sub-block.

In another example, if the intra-chroma prediction mode information for the chroma block indicates the LM, the decoding device may derive a first LM parameter for the first chroma sub-block and a second LM parameter for the second chroma sub-block. In this case, the first LM parameter is derived based on the neighboring reference samples of the first chroma sub-block and the sub-sampled neighboring reference samples of the first luma sub-block, and the second LM parameter is derived based on the neighboring reference samples of the second chroma sub-block and the sub-sampled neighboring reference samples of the second luma sub-block. The neighboring reference samples of the first chroma sub-block may include first left neighboring reference samples adjacent to the left boundary of the first chroma sub-block and first upper neighboring reference samples adjacent to the upper boundary of the first chroma sub-block. Further, the neighboring reference samples of the first chroma sub-block may include second left neighboring reference samples adjacent the left boundary of the second chroma sub-block and first upper neighboring reference samples adjacent the upper boundary of the second chroma sub-block. The number of neighboring reference samples in the first chroma sub-block may be equal to the number of sub-sampled neighboring reference samples in the first luma sub-block, and the number of neighboring reference samples in the second chroma sub-block may be equal to the number of sub-sampled neighbor reference samples of the second luma sub-block. The first LM parameter includes a first scaling factor and a first offset, and the decoding device applies the first scaling factor and the first offset to the subsampled restoration samples of the first luma sub-block to thereby derive prediction samples of the first chroma sub-block. The second LM parameter includes a second scaling factor and a second offset, and the decoding device applies the second scaling factor and the second offset to the sub-sampled restoration samples of the second luma sub-block to thereby derive the prediction sample of the second chroma sub-block.

On the other hand, although not shown, the decoding device can receive residual information on the residual samples from the bitstream. The residual information may include transform coefficients relating to residual samples.

The decoding device may derive the residual samples (or residual sample arrays) for the target block based on the residual information. The decoding device may generate restoration samples based on the prediction samples and the residual samples, and may derive a restoration block or a restoration picture based on the restoration samples. Thereafter, the decoding device can apply an in-loop filtering procedure such as deblocking filtering and/or SAO procedure to the restored picture in order to improve subjective/objective picture quality as necessary, as described above.

The method according to the present invention described above may be implemented in software. The encoding device and/or decoding device according to the present invention may be included in a device that performs image processing, for example, for a TV, a computer, a smart phone, a set-top box, or a display device.

When the embodiments of the present invention are implemented in software, the above-described method may be implemented by modules (processes, functions, and so on) that perform the functions described above. Such modules may be stored in memory and executed by a processor. The memory may be internal or external to the processor, and the memory may be coupled to the processor using various well known means. The processor may comprise an application-specific integrated circuit (ASIC), other chipsets, a logic circuit and/or a data processing device. The memory may include a ROM (read-only memory), a RAM (random access memory), a flash memory, a memory card, a storage medium, and/or other storage device.

**Claims**

1. An intra prediction method performed by a decoding device, the method comprising:

   deriving a split structure of a luma block;
   deriving intra chroma prediction mode information for inducing intra prediction mode of a chroma block corresponding to the luma block;
   deriving a plurality of chroma subblocks by partitioning the chroma block based on the partitioning structure of the luma block when the intra chroma prediction mode information represents derived mode (DM) or linear mode (LM); and
   generating prediction samples for the plurality of chroma subblocks

2. The intra prediction method of claim 1, wherein the luma block and the chroma block are position in a current slice, wherein the current slice is an I (intra) slice,
   wherein, if the current slice is the I slice, luma partition information chroma partition information for blocks in the current slice are individually signaled.

3. The intra prediction method of claim 1, wherein the intra prediction mode information indicates one of a planar mode, a DC mode, a vertical mode, a horizontal mode, and a derived mode (DM), and a linear mode (LM).

4. The intra prediction method of claim 1, wherein, on condition that an intra prediction mode of a first luma subblock within the luma block is different from an intra prediction mode of a second luma subblock, and the intra chroma prediction mode information for the chroma block indicates the DM, an intra prediction mode of the first luma subblock corresponding to the first chroma subblock is used as an intra prediction mode of a first chroma subblock among the plurality of chroma subblocks, and an intra prediction mode of the second luma subblock corresponding to the second chroma subblock is used as an intra prediction mode of a second chroma subblock.

5. The intra prediction method of claim 1, further comprising, on condition that the intra chroma prediction mode information for the chroma block indicates the LM, deriving a first LM parameter for a first chroma subblock and a second LM parameter for a second chroma subblock among the plurality of chroma subblocks,
   wherein the luma block includes a first luma subblock and a second luma subblock,
   wherein the first LM parameter is derived based on a neighboring reference sample of the first chroma subblock and a sub-sampled neighboring reference sample of the first luma subblock, and
   wherein the second LM parameter is derived based on a neighboring reference sample of the second chroma subblock and a sub-sampled neighboring reference sample of the second luma subblock.

6. The intra prediction method of claim 1, wherein the neighboring reference samples of the first chroma subblock include first left neighboring reference samples adjacent to a left boundary of the first chroma subblock and first upper neighbor reference samples adjacent to an upper boundary of the first chroma subblock, and
   wherein neighboring reference samples of the first chroma subblock include second left neighboring reference samples adjacent to a left boundary of the second chroma subblock and first upper neighboring reference samples adjacent to an upper boundary of the second chroma subblock.

7. The intra prediction method of claim 5, wherein a number of the neighboring reference samples of the first chroma subblock is equal to a number of the sub-sampled neighboring reference samples of the first luma subblock, and wherein a number of the neighboring reference samples of the second chroma subblock is equal to a number of the sub-sampled neighboring reference samples of the second luma subblock.

8. The intra prediction method of claim 5, wherein the first LM parameter includes a first scaling factor and a first offset and applies the first scaling factor and the first offset to a sub-sampled restoration sample of the first luma subblock to thereby derive a prediction sample of the first chroma subblock, and
   wherein the second LM parameter includes a second scaling factor and a second offset and applies the second scaling factor and the second offset to a sub-sampled restoration sample of the second luma subblock to thereby derive a prediction sample of the second chroma subblock.

9.  A decoding device for intra prediction, the decoding device comprising:

    a receiver configured to receive partition information; and
    a predictor configured to derive a split structure of a luma block based on the partition information, derive intra chroma prediction mode information for inducing intra prediction mode of a chroma block corresponding to the luma block, and derive a plurality of chroma subblocks by partitioning the chroma block based on the partitioning structure of the luma block when the intra chroma prediction mode information represents derived mode (DM) or linear mode (LM), and generate prediction samples for the plurality of chroma subblocks.

10. The decoding device of claim 9, wherein the luma block and the chroma block are position in a current slice, and wherein the current slice is an I (intra) slice.

11. The decoding device of claim 9, wherein, on condition that an intra prediction mode of a first luma subblock within the luma block is different from an intra prediction mode of a second luma subblock, and the intra chroma prediction mode information for the chroma block indicates the DM, an intra prediction mode of the first luma subblock corresponding to the first chroma subblock is used as an intra prediction mode of a first chroma subblock among the plurality of chroma subblocks, and an intra prediction mode of the second luma subblock corresponding to the second chroma subblock is used as an intra prediction mode of a second chroma subblock.

12. The decoding device of claim 9, wherein, on condition that the intra chroma prediction mode information for the chroma block indicates the LM, the predictor derives a first LM parameter for a first chroma subblock and a second LM parameter for a second chroma subblock among the plurality of chroma subblocks, wherein the luma block includes a first luma subblock and a second luma subblock, wherein the first LM parameter is derived based on a neighboring reference sample of the first chroma subblock and a sub-sampled neighboring reference sample of the first luma subblock, and wherein the second LM parameter is derived based on a neighboring reference sample of the second chroma subblock and a sub-sampled neighboring reference sample of the second luma subblock.

13. The decoding device of claim 12, wherein the neighboring reference samples of the first chroma subblock include first left neighboring reference samples adjacent to a left boundary of the first chroma subblock and first upper neighbor reference samples adjacent to an upper boundary of the first chroma subblock, and wherein neighboring reference samples of the first chroma subblock include second left neighboring reference samples adjacent to a left boundary of the second chroma subblock and first upper neighboring reference samples adjacent to an upper boundary of the second chroma subblock.

14. The decoding device of claim 12, wherein a number of the neighboring reference samples of the first chroma subblock is equal to a number of the sub-sampled neighboring reference samples of the first luma subblock, and wherein a number of the neighboring reference samples of the second chroma subblock is equal to a number of the sub-sampled neighboring reference samples of the second luma subblock.

15. The decoding device of claim 12, wherein the first LM parameter includes a first scaling factor and a first offset and applies the first scaling factor and the first offset to a sub-sampled restoration sample of the first luma subblock to thereby derive a prediction sample of the first chroma subblock, and wherein the second LM parameter includes a second scaling factor and a second offset and applies the second scaling factor and the second offset to a sub-sampled restoration sample of the second luma subblock to thereby derive a prediction sample of the second chroma subblock.

# FIG. 1

EP 3 509 298 A1

# FIG. 2

# FIG. 3

(a)

(b)

FIG. 4

(a) Luma structure

(b) Dependent chroma structure

(c) Independent chroma structure

# FIG. 5A

# FIG. 5B

0 : Intra_Planar
1 : Intra_DC

# FIG. 6

Luma          Chroma

# FIG. 7

(a)

Sub-sampled
Luma recon

(b) predictor(Chroma $_{compID}$) = $\alpha_{compID}$ x subsample(ReconLuma)+$\beta_{compID}$

# FIG. 8

Subsample recon-pixels of Luma

▨ : Recon-pixels (template)

☐ : Current block

(a) Luma

(b) Chroma

# FIG. 9

(a) Luma                   (b) Chroma

# FIG. 10

(a) Luma

(b) Chroma

# FIG. 11

(a) Luma                    (b) Chroma

# FIG. 12

(a) Luma                    (b) Chroma

# FIG. 13

1350

1300

(a) Luma

(b) Chroma

# FIG. 14

1450

1400

(a) Luma        (b) Chroma

# FIG. 15

(a) Luma      (b) Chroma

# FIG. 16

(a) Luma                    (b) Chroma

# FIG. 17

(a) Luma                    (b) Chroma

# FIG. 18

(a) Luma                              (b) Chroma

# FIG. 19

(a) Luma                    (b) Chroma

# FIG. 20

(a) Luma                    (b) Chroma

# FIG. 21

START

DERIVE PARTITIONING STRUCTURE
OF LUMA BLOCK — S2100

DERIVE INTRA CHROMA PREDICTION
MODE INFORMATION FOR INDUCING
INTRA PREDICTION MODE OF
CORRESPONDING CHROMA BLOCK — S2110

PARTITION CHROMA BLOCK BASED ON
PARTITIONING STRUCTURE OF
LUMA BLOCK IF INTRA CHROMA PREDICTION
MODE INFORMATION INDICATES DM OR LM — S2120

GENERATE PREDICTION SAMPLES BY
PERFORMING INTRA PREDICTION FOR
A PLURALITY OF CHROMA SUBBLOCKS — S2130

ENCODE AND OUTPUT LUMA PARTITION
INFORMATION AND PREDICTION INFORMATION — S2140

END

# FIG. 22

START

DERIVE PARTITIONING STRUCTURE
OF LUMA BLOCK — S2200

DERIVE INTRA CHROMA PREDICTION
MODE INFORMATION FOR INDUCING
INTRA PREDICTION MODE OF
CORRESPONDING CHROMA BLOCK — S2210

PARTITION CHROMA BLOCK BASED ON
PARTITIONING STRUCTURE OF LUMA
BLOCK IF INTRA CHROMA PREDICTION MODE
INFORMATION INDICATES DM OR LM — S2220

GENERATE PREDICTION SAMPLES BY
PERFORMING INTRA PREDICTION FOR
A PLURALITY OF CHROMA SUBBLOCKS — S2230

END

## INTERNATIONAL SEARCH REPORT

| International application No. |
|---|
| **PCT/KR2017/010888** |

### A. CLASSIFICATION OF SUBJECT MATTER

*H04N 19/11(2014.01)i, H04N 19/105(2014.01)i, H04N 19/593(2014.01)i, H04N 19/176(2014.01)i, H04N 19/186(2014.01)i, H04N 19/174(2014.01)i*

According to International Patent Classification (IPC) or to both national classification and IPC

### B. FIELDS SEARCHED

Minimum documentation searched (classification system followed by classification symbols)

H04N 19/11; H04N 19/122; H04N 19/186; H04N 19/107; H04N 19/59; H04N 19/124; H04N 19/50; H04N 19/134; H04N 19/105; H04N 19/593; H04N 19/176; H04N 19/174

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: luma, chroma, split, prediction, sub-sampling

### C. DOCUMENTS CONSIDERED TO BE RELEVANT

| Category* | Citation of document, with indication, where appropriate, of the relevant passages | Relevant to claim No. |
|---|---|---|
| X | KR 10-2015-0003219 A (SONY CORPORATION) 08 January 2015<br>See paragraphs [0080]-[0145], [0163]-[0181]; and figures 18a-18b, 21-22. | 1-15 |
| A | KR 10-2016-0048748 A (ELECTRONICS AND TELECOMMUNICATIONS RESEARCH INSTITUTE et al.) 04 May 2016<br>See paragraphs [0045]-[0099]; and figures 3-8. | 1-15 |
| A | KR 10-2012-0072357 A (SAMSUNG ELECTRONICS CO., LTD.) 03 July 2012<br>See paragraphs [0139]-[0176]; and figures 14a-20. | 1-15 |
| A | KR 10-2014-0088099 A (INFOBRIDGE PTE. LTD.) 09 July 2014<br>See paragraphs [0058]-[0089]; and figures 3-5. | 1-15 |
| A | KR 10-2015-0105348 A (INTELLECTUAL DISCOVERY CO., LTD.) 16 September 2015<br>See paragraphs [0038]-[0095]; and figures 2-6. | 1-15 |

☐ Further documents are listed in the continuation of Box C.  ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 10 JANUARY 2018 (10.01.2018) | **11 JANUARY 2018 (11.01.2018)** |

| Name and mailing address of the ISA/KR | Authorized officer |
|---|---|
| Korean Intellectual Property Office<br>Government Complex-Daejeon, 189 Seonsa-ro, Daejeon 302-701,<br>Republic of Korea<br>Facsimile No. +82-42-481-8578 | Telephone No. |

Form PCT/ISA/210 (second sheet) (January 2015)

INTERNATIONAL SEARCH REPORT
Information on patent family members

International application No.

PCT/KR2017/010888

| Patent document cited in search report | Publication date | Patent family member | Publication date |
|---|---|---|---|
| KR 10-2015-0003219 A | 08/01/2015 | AU 2013-254443 A1 | 23/10/2014 |
| | | AU 2013-254444 A1 | 31/10/2013 |
| | | AU 2013-254444 B2 | 29/10/2015 |
| | | AU 2013-254448 A1 | 06/11/2014 |
| | | AU 2013-254448 B2 | 19/11/2015 |
| | | AU 2016-204227 A1 | 14/07/2016 |
| | | CA 2870591 A1 | 31/10/2013 |
| | | CA 2870596 A1 | 31/10/2013 |
| | | CA 2870602 A1 | 31/10/2013 |
| | | CA 2871556 A1 | 31/10/2013 |
| | | CA 2871556 C | 29/08/2017 |
| | | CN 104247425 A | 24/12/2014 |
| | | CN 104247426 A | 24/12/2014 |
| | | CN 104255029 A | 31/12/2014 |
| | | CN 104255030 A | 31/12/2014 |
| | | CN 104272739 A | 07/01/2015 |
| | | CN 104285445 A | 14/01/2015 |
| | | EP 2842314 A2 | 04/03/2015 |
| | | EP 2842315 A1 | 04/03/2015 |
| | | EP 2842316 A1 | 04/03/2015 |
| | | EP 2842317 A1 | 04/03/2015 |
| | | EP 2842321 A2 | 04/03/2015 |
| | | EP 2858367 A2 | 08/04/2015 |
| | | EP 2858367 A3 | 29/04/2015 |
| | | GB 2501535 A | 30/10/2013 |
| | | GB 2501546 A | 30/10/2013 |
| | | GB 2501547 A | 30/10/2013 |
| | | GB 2501548 A | 30/10/2013 |
| | | GB 2501549 A | 30/10/2013 |
| | | GB 2501550 A | 30/10/2013 |
| | | GB 2501551 A | 30/10/2013 |
| | | GB 2501552 A | 30/10/2013 |
| | | GB 2501553 A | 30/10/2013 |
| | | GB 2501554 A | 30/10/2013 |
| | | GB 2501554 B | 24/09/2014 |
| | | GB 2501555 A | 30/10/2013 |
| | | GB 2501556 A | 30/10/2013 |
| | | GB 2501557 A | 30/10/2013 |
| | | GB 2501566 A | 30/10/2013 |
| | | JP 05965054 B2 | 03/08/2016 |
| | | JP 05986294 B2 | 06/09/2016 |
| | | JP 06050478 B2 | 21/12/2016 |
| | | JP 06128707 B2 | 17/05/2017 |
| | | JP 06231647 B2 | 15/11/2017 |
| | | JP 2015-515236 A | 21/05/2015 |
| | | JP 2015-518339 A | 25/06/2015 |
| | | JP 2015-518340 A | 25/06/2015 |
| | | JP 2015-518341 A | 25/06/2015 |
| | | JP 2015-518342 A | 25/06/2015 |

Form PCT/ISA/210 (patent family annex) (January 2015)

INTERNATIONAL SEARCH REPORT
Information on patent family members

International application No.

**PCT/KR2017/010888**

| Patent document cited in search report | Publication date | Patent family member | Publication date |
|---|---|---|---|
| | | JP 2015-518343 A | 25/06/2015 |
| | | JP 2016-201813 A | 01/12/2016 |
| | | JP 2017-055444 A | 16/03/2017 |
| | | KR 10-1734974 B1 | 15/05/2017 |
| | | KR 10-2014-0145606 A | 23/12/2014 |
| | | KR 10-2017-0041288 A | 14/04/2017 |
| | | KR 10-2017-0054561 A | 17/05/2017 |
| | | MX 2014012565 A | 05/12/2014 |
| | | MX 2014012846 A | 22/10/2015 |
| | | MX 2014012847 A | 22/10/2015 |
| | | MX 343351 B | 03/11/2016 |
| | | MX 345237 B | 23/01/2017 |
| | | MX 346235 B | 13/03/2017 |
| | | RU 2014147445 A | 10/06/2016 |
| | | RU 2014147451 A | 20/06/2016 |
| | | RU 2014147453 A | 20/06/2016 |
| | | RU 2599935 C2 | 20/10/2016 |
| | | RU 2603548 C2 | 27/11/2016 |
| | | RU 2619888 C2 | 19/05/2017 |
| | | TW 201408079 A | 16/02/2014 |
| | | TW 201408080 A | 16/02/2014 |
| | | TW 201408081 A | 16/02/2014 |
| | | TW I575942 B | 21/03/2017 |
| | | TW I586152 B | 01/06/2017 |
| | | US 2015-0043641 A1 | 12/02/2015 |
| | | US 2015-0063457 A1 | 05/03/2015 |
| | | US 2015-0063460 A1 | 05/03/2015 |
| | | US 2015-0078447 A1 | 19/03/2015 |
| | | US 2015-0085924 A1 | 26/03/2015 |
| | | US 2015-0117527 A1 | 30/04/2015 |
| | | US 2015-0172652 A1 | 18/06/2015 |
| | | US 2017-0272743 A1 | 21/09/2017 |
| | | US 2017-0339402 A1 | 23/11/2017 |
| | | US 9674531 B2 | 06/06/2017 |
| | | US 9686547 B2 | 20/06/2017 |
| | | US 9686548 B2 | 20/06/2017 |
| | | US 9693058 B2 | 27/06/2017 |
| | | US 9826231 B2 | 21/11/2017 |
| | | WO 2013-160656 A2 | 31/10/2013 |
| | | WO 2013-160656 A3 | 19/12/2013 |
| | | WO 2013-160693 A2 | 31/10/2013 |
| | | WO 2013-160693 A3 | 19/12/2013 |
| | | WO 2013-160694 A1 | 31/10/2013 |
| | | WO 2013-160694 A4 | 31/10/2013 |
| | | WO 2013-160695 A1 | 31/10/2013 |
| | | WO 2013-160696 A1 | 31/10/2013 |
| | | WO 2013-160697 A1 | 31/10/2013 |
| | | WO 2013-160698 A1 | 31/10/2013 |
| | | WO 2013-160699 A1 | 31/10/2013 |
| | | WO 2013-160700 A1 | 31/10/2013 |

Form PCT/ISA/210 (patent family annex) (January 2015)

INTERNATIONAL SEARCH REPORT
Information on patent family members

International application No.

**PCT/KR2017/010888**

| Patent document cited in search report | Publication date | Patent family member | Publication date |
|---|---|---|---|
| KR 10-2016-0048748 A | 04/05/2016 | AU 2013-250143 A1 | 23/10/2014 |
| | | AU 2013-250143 B2 | 12/11/2015 |
| | | AU 2016-200779 A1 | 25/02/2016 |
| | | AU 2016-200938 A1 | 03/03/2016 |
| | | CN 104322064 A | 28/01/2015 |
| | | EP 2840792 A1 | 25/02/2015 |
| | | JP 06169681 B2 | 26/07/2017 |
| | | JP 2015-515821 A | 28/05/2015 |
| | | JP 2017-123656 A | 13/07/2017 |
| | | JP 2017-201811 A | 09/11/2017 |
| | | JP 2017-201812 A | 09/11/2017 |
| | | JP 2017-201813 A | 09/11/2017 |
| | | KR 10-1591352 B1 | 04/02/2016 |
| | | KR 10-1591354 B1 | 04/02/2016 |
| | | KR 10-1765302 B1 | 04/08/2017 |
| | | KR 10-1765303 B1 | 04/08/2017 |
| | | KR 10-2013-0116837 A | 24/10/2013 |
| | | KR 10-2013-0116840 A | 24/10/2013 |
| | | KR 10-2013-0116841 A | 24/10/2013 |
| | | KR 10-2013-0116842 A | 24/10/2013 |
| | | US 2015-0063438 A1 | 05/03/2015 |
| | | WO 2013-157829 A1 | 24/10/2013 |
| KR 10-2012-0072357 A | 03/07/2012 | AU 2011-345535 A1 | 01/08/2013 |
| | | AU 2011-345535 B2 | 20/08/2015 |
| | | CA 2822800 A1 | 28/06/2012 |
| | | CA 2822800 C | 29/08/2017 |
| | | CA 2973094 A1 | 28/06/2012 |
| | | CN 103392341 A | 13/11/2013 |
| | | EP 2645719 A2 | 02/10/2013 |
| | | JP 06046840 B2 | 21/12/2016 |
| | | JP 2014-500692 A | 09/01/2014 |
| | | JP 2016-105619 A | 09/06/2016 |
| | | KR 10-2015-0060616 A | 03/06/2015 |
| | | KR 10-2017-0101840 A | 06/09/2017 |
| | | MX 2013007314 A | 25/10/2013 |
| | | RU 2013134263 A | 27/02/2015 |
| | | RU 2015104959 A | 20/08/2015 |
| | | RU 2595932 C2 | 27/08/2016 |
| | | SG 191347 A1 | 31/07/2013 |
| | | US 2013-0272401 A1 | 17/10/2013 |
| | | WO 2012-087077 A2 | 28/06/2012 |
| | | WO 2012-087077 A3 | 07/09/2012 |
| KR 10-2014-0088099 A | 09/07/2014 | CN 103139565 A | 05/06/2013 |
| | | CN 103139565 B | 08/08/2017 |
| | | CN 107172422 A | 15/09/2017 |
| | | CN 107197248 A | 22/09/2017 |
| | | CN 107197249 A | 22/09/2017 |
| | | CN 107277504 A | 20/10/2017 |

Form PCT/ISA/210 (patent family annex) (January 2015)

INTERNATIONAL SEARCH REPORT
Information on patent family members

International application No.

**PCT/KR2017/010888**

| Patent document cited in search report | Publication date | Patent family member | Publication date |
|---|---|---|---|
| | | EP 2786577 A1 | 08/10/2014 |
| | | JP 05714781 B2 | 07/05/2015 |
| | | JP 05990299 B2 | 14/09/2016 |
| | | JP 05990300 B2 | 14/09/2016 |
| | | JP 2015-109710 A | 11/06/2015 |
| | | JP 2015-109711 A | 11/06/2015 |
| | | JP 2015-502098 A | 19/01/2015 |
| | | JP 2016-189635 A | 04/11/2016 |
| | | KR 10-2013-0058524 A | 04/06/2013 |
| | | KR 10-2014-0088098 A | 09/07/2014 |
| | | KR 10-2014-0088100 A | 09/07/2014 |
| | | TW 201330635 A | 16/07/2013 |
| | | TW 201631966 A | 01/09/2016 |
| | | TW 201709729 A | 01/03/2017 |
| | | TW I544784 B | 01/08/2016 |
| | | TW I572190 B | 21/02/2017 |
| | | US 2014-0254677 A1 | 11/09/2014 |
| | | US 2015-0063448 A1 | 05/03/2015 |
| | | US 2015-0098501 A1 | 09/04/2015 |
| | | US 2015-0098502 A1 | 09/04/2015 |
| | | US 2015-0103891 A1 | 16/04/2015 |
| | | US 2016-0345016 A1 | 24/11/2016 |
| | | US 8942284 B2 | 27/01/2015 |
| | | US 9325995 B2 | 26/04/2016 |
| | | US 9392287 B2 | 12/07/2016 |
| | | US 9402078 B2 | 26/07/2016 |
| | | US 9445100 B2 | 13/09/2016 |
| | | WO 2013-075589 A1 | 30/05/2013 |
| KR 10-2015-0105348 A | 16/09/2015 | WO 2014-084671 A2 | 05/06/2014 |
| | | WO 2014-084671 A3 | 23/10/2014 |

Form PCT/ISA/210 (patent family annex) (January 2015)